(19) Europäisches Patentamt
European Patent Office
Office européen des brevets

(11) EP 3 537 190 A1

(12) EUROPEAN PATENT APPLICATION
published in accordance with Art. 153(4) EPC

(43) Date of publication:
**11.09.2019 Bulletin 2019/37**

(21) Application number: **17867431.3**

(22) Date of filing: **27.10.2017**

(51) Int Cl.:
***G02B 5/30*** (2006.01) ***B32B 17/10*** (2006.01)
***B60J 1/02*** (2006.01) ***B60K 35/00*** (2006.01)
***C03C 17/34*** (2006.01) ***C03C 27/12*** (2006.01)
***G02B 27/01*** (2006.01) ***G02F 1/13363*** (2006.01)

(86) International application number:
**PCT/JP2017/038852**

(87) International publication number:
**WO 2018/084076 (11.05.2018 Gazette 2018/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.11.2016 JP 2016215911**
**14.03.2017 JP 2017049013**

(71) Applicant: **Fujifilm Corporation**
**Minato-ku**
**Tokyo 106-8620 (JP)**

(72) Inventors:
- **ANZAI Akihiro**
**Minamiashigara-shi**
**Kanagawa 250-0193 (JP)**
- **KATO Shunya**
**Minamiashigara-shi**
**Kanagawa 250-0193 (JP)**

(74) Representative: **Klunker IP Patentanwälte PartG mbB**
**Destouchesstraße 68**
**80796 München (DE)**

# (54) WINDSHIELD GLASS, HEAD-UP DISPLAY SYSTEM, AND HALF-MIRROR FILM

(57) Provided are a head-up display system capable of displaying a screen image which is the generation of double images is suppressed and has high reflectance and high transmittance, and a windshield glass which is used in the head-up display system and in which a projection image display portion is inconspicuous under external light in a case of being seen from outside. The head-up display system includes: the projection image display portion; a circularly polarized light reflection layer and a λ/2 retardation layer which are included in the projection image display portion in which the circularly polarized light reflection layer includes four or more cholesteric liquid crystal layers and one layer of the four or more cholesteric liquid crystal layers has a center wavelength of selective reflection at 350 nm or more and less than 490 nm, the windshield glass; and a projector.

EP 3 537 190 A1

Printed by Jouve, 75001 PARIS (FR)

**Description**

## BACKGROUND OF THE INVENTION

1. Field of the Invention

The present invention relates to a windshield glass including a projection image display portion. In addition, the invention relates to a head-up display system using the windshield glass and a half-mirror film usable for the windshield glass.

2. Description of the Related Art

In a head-up display system, a projection image display member having a combiner function capable of displaying projection images and the driver's field of view at the same time is used. In the head-up display system in which a windshield glass provided with a projection image display portion having the combiner function is used, a double image which is generated by the projected light being reflected on a front surface or a back surface of the glass tends to become significant.

As a method for suppressing the generation of double image, JP2011-505330A discloses a technology of using a front glass having a wedge-shaped cross section for a car, which is formed of a laminated glass having a wedge-shaped cross section.

In addition, there are many known technologies for preventing double images from appearing in which Brewster's angle is used by allowing p-polarized light to be incident on a glass surface and reflection coefficient of reflected light from the glass surface is close to zero (for example, refer to JP2006-512622A). In WO2016/052367A, in a head-up display system using Brewster's angle, an example in which a projection image display member including a λ/2 retardation layer in addition to a circularly polarized light reflection layer including a cholesteric liquid crystal layer is used is disclosed.

## SUMMARY OF THE INVENTION

With the technology disclosed in JP2011-505330A, a sophisticated technology is necessary for adjusting an angle formed by an outer glass plate and an inner glass plate. On the other hand, with the technology described in JP2006-512622A or WO2016/052367A, such a sophisticated technology disclosed in JP2011-505330A is unnecessary.

The head-up display system described in WO2016/052367A is a system capable of obtaining higher light reflectance and light transmittance than an existing system by utilizing the technology described in JP2006-512622A. However, the present inventors further studied the case of using the projection image display member including the circularly polarized light reflection layer and the λ/2 retardation layer described in WO2016/052367A as a windshield glass, and found that there was still room for improvement from a viewpoint of exterior of the windshield glass in a case where the projection image display portion of the windshield glass is seen from outside under external light.

The present invention is made to solve the above problem, and an object of the invention is to provide a windshield glass which includes a projection image display portion capable of providing a head-up display system capable of displaying an image in which the generation of double images is suppressed and which has high reflectance and high transmittance, and in which the projection image display portion is inconspicuous under external light and in a case of being seen from outside.

In view of the above problem, the present inventor conducted intensive studies on the configuration in a case of using the projection image display member including the circularly polarized light reflection layer and the λ/2 retardation layer described in WO2016/052367A as a windshield glass, and found that the above problems can be solved by including the cholesteric liquid crystal layer in which the circularly polarized light reflection layer exhibits selective reflection in a specific wavelength region, thereby completing the invention.

That is, the invention provides the following [1] to [18].

[1] A windshield glass comprises: a projection image display portion, in which the projection image display portion includes a circularly polarized light reflection layer and a λ/2 retardation layer, the circularly polarized light reflection layer includes four or more cholesteric liquid crystal layers, one layer of the four or more cholesteric liquid crystal layers is a cholesteric liquid crystal layer having a center wavelength of selective reflection at 350 nm or more and less than 490 nm, and the four or more cholesteric liquid crystal layers have center wavelengths of selective reflection different from each other.

[2] The windshield glass according to [1], in which the cholesteric liquid crystal layer nearest to the λ/2 retardation layer among the four or more cholesteric liquid crystal layers is the cholesteric liquid crystal layer having a center wavelength of selective reflection at 350 nm or more and less than 490 nm.

[3] The windshield glass according to [1] or [2], in which the circularly polarized light reflection layer includes a cholesteric liquid crystal layer having a center wavelength of selective reflection at 490 nm or more and less than 600 nm, a cholesteric liquid crystal layer having a center wavelength of selective reflection at 600 nm or more and less than 680 nm, and a cholesteric liquid crystal layer having a center wavelength of selective reflection at 680 nm or more and less than 850 nm.

[4] The windshield glass according to [3], in which the λ/2 retardation layer, a cholesteric liquid crystal layer having a center wavelength of selective reflection at 350nm or more and less than 490nm, a cholesteric liquid crystal layer having a center wavelength of selective reflection at 490nm or more and less than 600nm, a cholesteric liquid crystal layer having a center wavelength of selective reflection at 600nm or more and less than 680nm, and a cholesteric liquid crystal layer having a center wavelength of selective reflection at 680nm or more and less than 850nm are arranged in this order.

[5] The windshield glass according to any one of [1] to [4], in which a front phase difference of the λ/2 retardation layer is in a range of 190 nm to 390 nm.

[6] The windshield glass according to any one of [1] to [5], in which all of senses of helixes of the cholesteric liquid crystal layers included in the circularly polarized light reflection layer are the same as each other.

[7] The windshield glass according to any one of [1] to [6], in which a total thickness of layers on the λ/2 retardation layer side with respect to the circularly polarized light reflection layer is 0.5 mm or more.

[8] The windshield glass according to any one of [1] to [7], further comprises: a first glass plate; a second glass plate; and an interlayer between the first glass plate, the second glass plate, in which at least a part of the interlayer includes the circularly polarized light reflection layer and the λ/2 retardation layer, and the first glass plate, the circularly polarized light reflection layer, the λ/2 retardation layer, and the second glass plate are laminated in this order.

[9] The windshield glass according to [8], in which the interlayer is a resin film.

[10] The windshield glass according to [9], in which the resin film includes polyvinylbutyral.

[11] The windshield glass according to any one of [1] to [10], in which a slow axis of the λ/2 retardation layer is in a range of +40° to +65° or in a range of -40° to -65° with respect to an upper vertical direction of the projection image display portion.

[12] The windshield glass according to any one of [1] to [10], in which all of senses of helixes of the cholesteric liquid crystal layers included in the circularly polarized light reflection layer are right, and a slow axis of the λ/2 retardation layer is in a range of 40° to 65° clockwise with respect to an upper vertical direction of the projection image display portion in a case where the slow axis is seen from the λ/2 retardation layer side with respect to the circularly polarized light reflection layer.

[13] The windshield glass according to any one of [1] to [10], in which all of senses of helixes of the cholesteric liquid crystal layers included in the circularly polarized light reflection layer are left, and a slow axis of the λ/2 retardation layer is in a range of 40° to 65° anticlockwise with respect to an upper vertical direction of the projection image display portion in a case where the slow axis is seen from the λ/2 retardation layer side with respect to the circularly polarized light reflection layer.

[14] The windshield glass according to any one of [1] to [13], wherein a half-width Δλ of the selective reflection in at least one or more of the cholesteric liquid crystal layers is 50 nm or less.

[15] A head-up display system comprises: the windshield glass according to any one of claims 1 to 14; and a projector, in which the λ/2 retardation layer is disposed closer to the projector than the circularly polarized light reflection layer, and an incidence ray from the projector is incident at an angle of 45° to 70° with respect to a normal line of the projection image display portion.

[16] The head-up display system according to [15], in which the incidence ray is p-polarized light which vibrates in a direction parallel to a plane of incidence.

[17] The head-up display system according to [15] or [16], in which the incidence ray is incident from a bottom of the projection image display portion.

[18] a half-mirror film comprises: a circularly polarized light reflection layer; and a λ/2 retardation layer, in which the circularly polarized light reflection layer includes a cholesteric liquid crystal layer having a center wavelength of selective reflection at 350 nm or more and less than 490 nm, a cholesteric liquid crystal layer having a center wavelength of selective reflection at 490 nm or more and less than 600 nm, a cholesteric liquid crystal layer having a center wavelength of selective reflection at 600 nm or more and less than 680 nm, and a cholesteric liquid crystal layer having a center wavelength of selective reflection at 680 nm or more and less than 850 nm, in this order from the λ/2 retardation layer.

According to the invention, it is possible to provide a windshield glass which can display a screen image in which the generation of double images is suppressed and has high reflectance and high transmittance, and in which the projection image display portion is inconspicuous under external light and in a case of being seen from outside.

## BRIEF DESCRIPTION OF THE DRAWINGS

Fig. 1 is a diagram illustrating an arrangement of a windshield glass, a liquid crystal panel, and a brightness meter in a case of evaluating the windshield glass of an example.

## DESCRIPTION OF THE PREFERRED EMBODIMENTS

Hereinafter, the invention will be described in detail.

In the specification, "to" is used as a meaning including numerical values disclosed before and after "to" as a lower limit value and an upper limit value.

In addition, in the specification, angles (for example, angles of "90°" and the like) and relationships thereof (for example, "parallel", "horizontal", and "perpendicular" states) include a range of errors allowed in the technical field of the invention. For example, this means that the error is in a range of less than ± 10° from an exact angle and the error from the exact angle is preferably 5° or less and more preferably 3° or less.

In the specification, in a case where an expression "selective" is used regarding circularly polarized light, light amount of any one of a right-handed circularly polarized light component and a left-handed circularly polarized light component of incidence ray is greater than the light intensity of the other circularly polarized light components. Specifically, in a case where an expression "selective" is used, a degree of circular polarization of light is preferably 0.3 or more, more preferably 0.6 or more, and still more preferably 0.8 or more. Substantially, the degree of circular polarization of light is still more preferably 1.0. Here, in a case where the intensity of a right-handed circularly polarized light component of light is set as $I_R$ and the intensity of a left-handed circularly polarized light component of light is set as $I_L$, the degree of circular polarization is a value represented by $|I_R - I_L|/(I_R + I_L)$.

In the specification, a term "sense" regarding circularly polarized light means right-handed circularly polarized light or left-handed circularly polarized light. In a case of observing light so that light is emitted frontward, the sense of the circularly polarized light is right-handed circularly polarized light in a case where an end point of an electric field vector rotates clockwise in accordance with the lapse of time, and the sense of the circularly polarized light is left-handed circularly polarized light in a case where an end point of an electric field vector rotates anticlockwise.

In the specification, a term "sense" may be used in regards to a twisted direction of a helix of a cholesteric liquid crystal. In a case where a twisted direction (sense) of a helix of a cholesteric liquid crystal is right, the cholesteric liquid crystal reflects right-handed circularly polarized light and transmits left-handed circularly polarized light, and in a case where the sense is left, the cholesteric liquid crystal reflects left-handed circularly polarized light and transmits right-handed circularly polarized light.

In the specification, a term "light" means light of visible light and natural light (non-polarized light), unless otherwise noted. A visible ray is light at a wavelength which is visible to the human eye, among electromagnetic waves, and is normally light in a wavelength region of 380 nm to 780 nm.

In the specification, a measurement of light intensity which is necessary for the calculation of light transmittance may be performed by any method, as long as light intensity is, for example, measured with a typical visible spectrometer by using reference as air.

In the specification, in a case where terms "reflected light" or "transmitted light" are simply used, the terms means are used as meanings to include scattered light and diffracted light.

A polarized state of light at each wavelength can be measured with a spectral radiance meter or a spectrometer on which a circularly polarizing plate is mounted. In this case, the intensity of light measured through a right-handed circularly polarizing plate corresponds to $I_R$, and the intensity of light measured through a left-handed circularly polarizing plate corresponds to $I_L$. In addition, the polarized state can also be measured by attaching the circularly polarizing plate to an illuminance meter or an optical spectrometer. The right-handed circularly polarized light amount is measured by attaching a right-handed circularly polarized light transmission plate thereto, the left-handed circularly polarized light amount is measured by attaching a left-handed circularly polarized light transmission plate thereto, and thus, a ratio therebetween can be measured.

In the specification, p-polarized light means polarized light which vibrates in a direction parallel to a plane of incidence of light. The plane of incidence means a surface which is perpendicular to a reflecting surface (windshield glass surface or the like) and contains the incident rays and reflected rays. A vibrating surface of an electric field vector of the p-polarized light is parallel to the plane of incidence. In the specification, s-polarized light means polarized light which vibrates in a direction perpendicular to a plane of incidence of light.

In the specification, a front phase difference is a value measured with AxoScan manufactured by Axometrics, Inc. The measurement wavelength is set as 550 nm. Regarding the front phase difference, a value measured by emitting light in a visible light wavelength region in a film normal direction by using KOBRA 21ADH or WR (manufactured by Oji Scientific Instruments) can also be used. In regards to the selection of the measurement wavelength, a wavelength selective filter can be manually replaced or a measurement value can be measured by replacing a program or the like.

In the specification, a value of birefringence (Δn) of a liquid crystal compound is a value measured by a method disclosed on p. 214 of Liquid Crystal-Basics (Koji Okano, Shunsuke Kobayashi ed). Specifically, a liquid crystal compound is injected to a wedge-shaped cell, light at a wavelength of 550 nm is incident thereto, a refractive angle of the transmitted light is measured, and thus, Δn at 60°C can be acquired.

In the specification, "projection image" means an image based on projection of light from a projector to be used, which is not a scenery viewed from the driver's position such as the driver's field. The projection image is observed as a virtual image which is observed by an observer as the projection image is floated over the projection image display portion of the windshield glass.

In the specification, "screen image" means an image displayed on a drawing device of a projector or an image drawn on an intermediate image screen or the like by a drawing device. Unlike a virtual image, the screen image is a real image.

Both the screen image and the projection image may be monochrome images, multicolor images of two or more colors, or full color images.

<Windshield Glass>

In the specification, a windshield glass generally means a window glass of wheeled vehicles such as cars and trains, and vehicles such as airplanes, ships, and play equipment. The windshield glass is preferably the front glass in a travelling direction of the vehicles. The windshield glass is preferably the front glass of wheeled vehicles.

The windshield glass may have a planar shape. In addition, the windshield glass may be formed for a built-in windshield glass for a vehicle to which the windshield is applied, and may have, for example, a curved surface. In the windshield glass formed for a vehicle subjected to be applied, an upward direction (vertically) during normal use and a surface set to be an observer side can be specified. In this specification, in a case of referring to an upper vertical direction regarding the windshield glass or the projection image display portion, the upper vertical direction means a direction that can be specified as described above during normal use.

The thickness of the windshield glass may be uniform or non-uniform in the projection image display portion. For example, the windshield glass may have a wedge-shaped cross section and the thickness of the projection image display portion may be non-uniform as the glass for vehicles described in JP2011-505330A, but the thickness of the projection image display portion is preferable to be uniform.

[Projection Image Display Portion]

A windshield glass of the invention includes a projection image display portion.

In the specification, the projection image display portion is a portion that can display a projection image with reflected light, and may be a portion that can display a projection image projected from a projector or the like in a visible manner.

The projection image display portion functions as a combiner of a head-up display system. In the head-up display system, the combiner means an optical member that can display a screen image projected from a projector in a visible manner, and in a case where the combiner is observed from the same surface side on which the screen image is displayed, information or outside views on a surface side opposite to the surface side on which the screen image is displayed can be observed at the same time. That is, the combiner functions as an optical path combiner for superimposing and displaying external light and image light.

The projection image display portion may be formed on the entire surface of the windshield glass or may be formed on a part of the entire area of the windshield glass, and it is preferable to be partially formed. In a case where the projection image display portion is partially formed, the projection image display portion may be provided at any position on the windshield glass, and the projection image display portion is preferably provided so that a virtual image is displayed at a position where the projection image can be easily visible from an observer (for example, a driver), in a case where the windshield glass is used in a head-up display system. For example, the position where the projection image display portion is provided may be determined in accordance with the relationship between a position of a driver's seat of a vehicle subjected to be applied, and a position where a projector is installed.

The projection image display portion may have a flat surface shape without a curved surface, or may include a curved surface. In addition, the whole projection image display portion may have a concave shape or a convex shape and display a projection image that may be expanded or contracted.

The windshield glass of the invention includes a circularly polarized light reflection layer and a λ/2 retardation layer in the projection image display portion. The projection image display portion may include layers such as a second retardation layer, an orientation layer, a support, and an adhesive layer which will be described later, in addition to the circularly polarized light reflection layer and the λ/2 retardation layer.

In a case where the windshield glass is applied to the vehicle, the projection image display portion may be

configured so that the λ/2 retardation layer and the circularly polarized light reflection layer are arranged in this order from a side to be an observer side (usually vehicle inside). Here, the observer side may be on a projection image display side and on an incidence side of projected light for projection image display.

The projection image display portion may be a projection image display portion functioning as a half-mirror for at least projected light. However, for example, it is not necessary to function as a half-mirror for the entire visible light range. In addition, the projection image display portion may have a function as the half-mirror for light at all angles of incidence, and may have a function as the half-mirror, at least, for light at some angles of incidence.

It is preferable that the projection image display portion has visible light transmittance, in order to observe information or outside views on the opposite surface side. The projection image display portion may have a light transmittance of 40% or more, preferably 50% or more, more preferably 60% or more, still more preferably 70% or more in the wavelength region of visible light. The light transmittance is determined as a light transmittance obtained by a method described in JIS-K7105.

[Half-Mirror Film]

The projection image display portion may be formed of a half-mirror film including the λ/2 retardation layer and the circularly polarized light reflection layer.

For example, the projection image display portion can be formed by providing the half-mirror film on an outer surface of a glass plate of the windshield glass, or by providing the half-mirror film on an interlayer of the windshield glass having a laminated glass configuration as described later. In a case where the half-mirror film is provided on the outer surface of the glass plate of the windshield glass, the half-mirror film may be provided on the observer side seen from the glass plate or on the opposite side thereof, and it is preferable to be provided on the observer side. More preferably, the half-mirror film is provided on the interlayer. This is because the half-mirror film having low scratch resistance compared with the glass plate is protected.

The circularly polarized light reflection layer and the λ/2 retardation layer may be separately prepared and bonded to each other to form a half-mirror film, and to form a half-mirror film by forming the λ/2 retardation layer on the circularly polarized light reflection layer (cholesteric liquid crystal layer) or by forming the circularly polarized light reflection layer (cholesteric liquid crystal layer) on the λ/2 retardation layer.

The half-mirror film may have shapes of film-like, sheet-like, or plate-like. The half-mirror film may be formed in a shape of roll or the like as a thin film.

The half-mirror film may include layers such as a second retardation layer, an orientation layer, a support, and an adhesive layer which will be described later, in addition to the circularly polarized light reflection layer and the λ/2 retardation layer.

[Circularly Polarized Light Reflection Layer]

The circularly polarized light reflection layer is a layer that reflects light for displaying a projection image and a layer that is included in the projection image display portion of the invention so as to distinguish from the retardation layer. The circularly polarized light reflection layer contains four or more cholesteric liquid crystal layers. The circularly polarized light reflection layer may include other layers such as a support, an orientation layer, and the like.

[Cholesteric Liquid Crystal Layer]

In the specification, the cholesteric liquid crystal layer means a layer obtained by fixing a cholesteric liquid crystalline phase. The cholesteric liquid crystal layer may be simply referred to as a liquid crystal layer.

The cholesteric liquid crystal layer may be a layer in which orientation of a liquid crystal compound as the cholesteric liquid crystalline phase is maintained, and typically, may be a layer obtained by setting a state of polymerizable liquid crystal compound in an orientation state of cholesteric liquid crystalline phase, polymerizing and curing the polymerizable liquid crystal compound by ultraviolet light irradiation or heating to form a layer having no fluidity, and, at the same time, changing the state thereof to a state where a change does not occur in the orientation state due to an external field or an external force. In the cholesteric liquid crystal layer, optical properties of the cholesteric liquid crystalline phase may be maintained in the layer, and the liquid crystal compound in the layer may not exhibit liquid crystal properties. For example, the polymerizable liquid crystal compound may have high molecular weight due to a curing reaction and lose liquid crystal properties.

It is known that the cholesteric liquid crystalline phase exhibits circularly polarized light selective reflection of selectively reflecting circularly polarized light of any one sense of right-handed circularly polarized light or left-handed circularly polarized light, and transmitting circularly polarized light of the other sense. In the specification, the circularly polarized light selective reflection may be simply referred to as selective reflection.

A large number of films formed of a composition including a polymerizable liquid crystal compound is known in the related art, as a film including a layer obtained by fixing a cholesteric liquid crystalline phase exhibiting circularly polarized light selective reflection properties, and thus, regarding the cholesteric liquid crystal layer, the technologies of the related art can be referred to.

A center wavelength $\lambda$ of selective reflection of the cholesteric liquid crystal layer depends on a pitch P (= period of helix) of a helix structure of the cholesteric phase and satisfies a relationship of $\lambda$ = n x P, with an average refractive index n of the cholesteric liquid crystal layer. In the specification, the center wavelength $\lambda$ of selective reflection of the cholesteric liquid crystal layer means a wavelength at the center of gravity of reflection peak of circularly polarized light reflection spectra measured in a normal direction of the cholesteric liquid crystal layer.

The center wavelength of selective reflection and a half-width of the cholesteric liquid crystal layer can be obtained as follows.

In a case where the transmission spectrum (measured from the normal direction in the cholesteric liquid crystal layer) of the cholesteric liquid crystal layer is measured using a spectrophotometer UV3150 (Shimadzu Corporation), a reduction of peak transmittance is observed in the selective reflection band. Among the two wavelengths that are intermediate (average) transmittance between a minimum transmittance of the peak and a transmittance before the peak transmittance is reduced, assuming that a wavelength value of a shorter wavelength side is set $\lambda_l$ (nm).and a wavelength value of a longer wavelength side is set $\lambda_h$ (nm), the center wavelength $\lambda$ and the half-width $\Delta\lambda$ of the selective reflection can be expressed by the following expression.

$$\lambda = (\lambda_l + \lambda_h)/2 \ \Delta\lambda = (\lambda_h - \lambda_l)$$

The center wavelength of selective reflection which is obtained as described above substantially coincides with a wavelength at the center of gravity of reflection peak of circularly polarized light reflection spectra measured in a normal direction of the cholesteric liquid crystal layer.

As shown in the expression of $\lambda$ = n x P, the center wavelength of selective reflection can be adjusted by adjusting a pitch of the helix structure. The cholesteric liquid crystal layer showing the selective reflection in the visible light region preferably has the center wavelength of selective reflection in the visible light region. By adjusting the n value and P value, for example, in order to selectively reflect any one of the right-handed circularly polarized light or the left-handed circularly polarized light to red light, green light, blue light, the center wavelength $\lambda$ can be adjusted.

In the head-up display system, it is preferable that the light obliquely enters the circularly polarized light reflection layer so that reflectance from the glass surface on the projected light incidence side becomes low. In this case, in a case where light is incident to cholesteric liquid crystal layer obliquely, the center wavelength of selective reflection is shifted to the shorter wavelength side. Accordingly, it is preferable that the value of n x P is adjusted so that the wavelength $\lambda$ calculated based on the expression of $\lambda$ = n x P becomes a longer wavelength side than the wavelength of the selective reflection necessary for display of the projection image. In a case where a center wavelength of selective reflection when a ray of light passes at an angle of $\theta_2$ with respect to the normal direction of the cholesteric liquid crystal layer (a helix axis direction of the cholesteric liquid crystal layer) in the cholesteric liquid crystal layer having a refractive index $n_2$ is set as $\lambda_d$, the $\lambda_d$ is represented by the following expression.

$$\lambda_d = n_2 \text{ x } P \text{ x } \cos\theta_2$$

For example, light incident from the $\lambda$/2 retardation layer side at an angle of 45° to 70° with respect to the normal line of the projection image display portion in air having a refractive index of 1 transmits through the $\lambda$/2 retardation layer having a refractive index usually about 1.45 to 1.80 at an angle of 23° to 40° with respect to the normal line of the projection image display portion, and is incident on the cholesteric liquid crystal layer having a refractive index about 1.61. Since light transmits through the cholesteric liquid crystal layer at an angle of 26° to 36°, this angle and the obtained center wavelength of selective reflection may be substituted into the above expression, and n $\times$ P is adjusted.

The pitch of the cholesteric liquid crystalline phase depends on the type of chiral agents used together with the polymerizable liquid crystal compound and the addition concentration thereof, and thus, a desired pitch can be obtained by adjusting these. As a measurement method of the sense or the pitch of the helix, methods disclosed in "Liquid Crystal Chemistry Experiment Introduction" edited by The Japanese Liquid Crystal Society, published by Sigma Publication 2007, pp. 46, and "Handbook of liquid crystals Editorial Committee of Handbook of liquid crystals, Maruzen, pp. 196 may be used.

The circularly polarized light reflection layer includes four or more cholesteric liquid crystal layers, and the four or more cholesteric liquid crystal layers have center wavelengths of selective reflection different from each other. The circularly polarization reflection layer preferably has a spurious center wavelength of selective reflection for red light,

green light, and blue light respectively. The spurious center wavelength of selective reflection means a wavelength at the center of gravity of reflection peak of circularly polarized light reflection spectra of the cholesteric liquid crystal layer measured in an observing direction during practical use. The circularly polarized light reflection layer has the spurious center wavelength of selective reflection for red light, green light, and blue light respectively so that full color projection images can be displayed. Specifically, the circularly polarized light reflection layer preferably includes a cholesteric liquid crystal layer that selectively reflects red light, a cholesteric liquid crystal layer that selectively reflects green light, and a cholesteric liquid crystal layer that selectively reflects blue light preferable. The circularly polarized light reflection layer preferably includes, for example, a cholesteric liquid crystal layer having a center wavelength of selective reflection at 490 nm or more and less than 600 nm, a cholesteric liquid crystal layer having a center wavelength of selective reflection at 600 nm or more and less than 680 nm, and a cholesteric liquid crystal layer having a center wavelength of selective reflection at 680 nm or more and less than 850 nm.

It is possible to display a clear colored projection image having excellent light use efficiency by adjusting the center wavelengths of selective reflection of the cholesteric liquid crystal layers to be used in accordance with an emission wavelength region of a light source used for projection and a utilizing state of the circularly polarized light reflection layer. It is possible to display a clear colored projection image having excellent light use efficiency by particularly adjusting the center wavelengths of selective reflection of each of the cholesteric liquid crystal layers respectively in accordance with an emission wavelength region of a light source used for projection. As an aspect of the utilizing state of the circularly polarized light reflection layer, there is, in particular, an incidence angle of the projected light on the circularly polarized light reflection layer, a direction of observing the projection image, and the like.

In the windshield glass of the invention, the circularly polarized light reflection layer includes a cholesteric liquid crystal layer having a center wavelength of selective reflection at 350 nm or more and less than 490 nm as one of four or more cholesteric liquid crystal layers. The inventors have found that in a case where the configuration including the circularly polarized light reflection layer and the $\lambda/2$ retardation layer is provided on the windshield glass as a projection image display portion, a tint (in particular, yellow tint) is confirmed in a case of observing the projection image display portion on the windshield glass under external light. By using the circularly polarized light reflection layer including the cholesteric liquid crystal layer having the center wavelength of selective reflection at 350 nm or more and less than 490 nm, even in a case where the windshield glass is observed under external light, the tint is less likely to be felt on the projection image display portion, and thus the projection image display portion is inconspicuous from outside. In the head-up display system, it is preferable that optical design is performed on the premise that light is obliquely incident on the circularly polarized light reflection layer in order to suppress the generation of double images by using the Brewster's angle. In addition, in order to design a circularly polarized light reflection layer having the spurious center wavelength of selective reflection for red light, green light, and blue light respectively, the blue light component relatively decreases in light reflected from the light incident on the normal direction of the circularly polarized light reflection layer, and thus a yellow tint is likely obtained. By using the cholesteric liquid crystal layer having a center wavelength of selective reflection at 350 nm or more and less than 490 nm, it is considered that the blue light component of the reflected light is increased and therefore the yellow tint is eliminated.

In addition, as shown in examples described later, by using the cholesteric liquid crystal layer having the center wavelength of selective reflection at 350 nm or more and less than 490 nm, it is possible to reduce glare that can be felt even through polarized sunglasses is used in a case of observing external light through the projection image display portion. Generally, s-polarized light based on reflected light from a ground surface or a water surface which is not visually confirmed in a case of using the polarized sunglasses, can be converted into a visible light component which is visually confirmed by changing a polarized state at the projection image display portion. However, it is considered that the light component is decreased by utilizing the cholesteric liquid crystal layer having the center wavelength of selective reflection at 350 nm or more and less than 490 nm.

A cholesteric liquid crystal layer having the center wavelength of selective reflection at 350 nm or more and less than 490 nm (hereinafter, referred to as "shorter wavelength cholesteric liquid crystal layer") preferably has a center wavelength of selective reflection at 370 nm to 485 nm, more preferably 390 nm to 480 nm, and still more preferably 400 nm to 470 nm.

The shorter wavelength cholesteric liquid crystal layer may have a spurious center wavelength of selective reflection at 280 nm or more and less than 420 nm, preferably 300 nm or more and less than 410 nm, more preferably 320 nm or more and less than 400 nm, and still more preferably 340 nm or more and less than 395 nm, in a case where the shorter wavelength cholesteric liquid crystal layer is used in the head-up display system.

In the circularly polarized light reflection layer, the shorter wavelength cholesteric liquid crystal layer of the four or more cholesteric liquid crystal layers is preferably on the side closest to the $\lambda/2$ retardation layer. This is because the generation of double images is further suppressed.

In the circularly polarized light reflection layer, it is preferable that the cholesteric liquid crystal layer is arranged in order from a layer having the shortest center wavelength of selective reflection to a layer having the longest center wavelength of selective reflection in a case where the cholesteric liquid crystal layer is seen from the $\lambda/2$ retardation

layer side. For example, the λ/2 retardation layer, a cholesteric liquid crystal layer having a center wavelength of selective reflection at 350nm or more and less than 490nm, a cholesteric liquid crystal layer having a center wavelength of selective reflection at 490nm or more and less than 600nm, a cholesteric liquid crystal layer having a center wavelength of selective reflection at 600nm or more and less than 680nm, and a cholesteric liquid crystal layer having a center wavelength of selective reflection at 680nm or more and less than 850nm are preferably arranged in this order.

As each cholesteric liquid crystal layer, a cholesteric liquid crystal layer in which the sense of helix is right or left is used. The sense of the reflected circularly polarized light of the cholesteric liquid crystal layer coincides with the sense of helix. All of the senses of helixes of the cholesteric liquid crystal layers having different center wavelengths of selective reflection may be the same as each other or different from each other, but it is preferable that all of the senses of helixes of the cholesteric liquid crystal layers are the same as each other.

A half-width $\Delta\lambda$ (nm) of a selective reflection band indicating the selective reflection depends on the birefringence $\Delta n$ of the liquid crystal compound and the pitch P satisfies a relationship of $\Delta\lambda = \Delta n \times P$. Accordingly, the width of the selective reflection band can be controlled by adjusting the value of $\Delta n$. The value of $\Delta n$ can be adjusted by adjusting the type of the polymerizable liquid crystal compound or a mixing ratio thereof or controlling a temperature at the time of oriented immobilization.

In order to form one type of cholesteric liquid crystal layer having the same center wavelength of selective reflection, a plurality of cholesteric liquid crystal layers having the same pitch P and the same sense of a helix may be laminated. By laminating the cholesteric liquid crystal layers having the same pitch P and the same sense of a helix, the circularly polarized light selectivity at a specific wavelength can be increased.

The half-width $\Delta\lambda$ of the selective reflection may be 15 nm to 200 nm, 15 nm to 150 nm, or 20 nm to 100 nm, or the like. The circularly polarized light reflection layer preferably includes at least one cholesteric liquid crystal layer having a half-width $\Delta\lambda$ of selective reflection at 50 nm or less. In the specification, a cholesteric liquid crystal layer having a half-width $\Delta\lambda$ of selective reflection at 50 nm or less may be referred to as a narrow-band selective reflection layer. More preferably, the circularly polarized light reflection layer includes two narrow-band selective reflection layers. In particular, it is preferable that the cholesteric liquid crystal layer having the spurious center wavelength of selective reflection for green light and blue light is the narrow-band selective reflection layer. Since the cholesteric liquid crystal layer having the spurious center wavelength of selective reflection for green light and blue light is the narrow-band selective reflection layer, it is possible to form a projection image display portion which displays a clear projection image without impairing the transparency of the windshield glass.

In a case where laminating the plurality of cholesteric liquid crystal layers, a cholesteric liquid crystal layer which is separately prepared may be laminated by using an adhesive and the like, or a step of directly applying a liquid crystal composition including a polymerizable liquid crystal compound and the like to the surface of a cholesteric liquid crystal layer which is formed in advance by a method which will be described later, and allowing the orientation and fixing may be repeatedly performed, and the latter method is preferable. This is because, by directly applying a subsequent cholesteric liquid crystal layer to the surface of a cholesteric liquid crystal layer formed in advance, an orientation direction of liquid crystal molecules on an air interface side of the cholesteric liquid crystal layer formed in advance and an orientation direction of liquid crystal molecules on a lower side of the cholesteric liquid crystal layer formed thereon coincide with each other, and excellent polarization properties of the laminate of the cholesteric liquid crystal layers are obtained. Furthermore, this is because, interference unevenness which may occur due to uneven thickness of the adhesive layer is not observed.

(Preparing Method of Cholesteric Liquid Crystal Layer)

Hereinafter, manufacturing materials and a manufacturing method of the cholesteric liquid crystal layer will be described.

As a material used for formation of the cholesteric liquid crystal layer, a liquid crystal composition including a polymerizable liquid crystal compound and a chiral agent (optically active compound) is used. The liquid crystal composition obtained by further mixing a surfactant or a polymerization initiator, if necessary, and dissolving in a solvent, is applied to a support, an orientation layer, and a cholesteric liquid crystal layer which is an underlayer, causing cholesteric orientation and maturing, performing immobilization by curing the liquid crystal composition, and thus, a cholesteric liquid crystal layer can be formed.

(Polymerizable Liquid Crystal Compound)

The polymerizable liquid crystal compound may be a rod-shaped polymerizable liquid crystal compound or a disk-shaped liquid crystal compound, and a rod-shaped liquid crystal compound is preferable.

As an example of the rod-shaped liquid crystal compound for forming the cholesteric liquid crystal layer, a rod-shaped nematic liquid crystal compound is used. As the rod-shaped nematic liquid crystal compound, azomethines,

azoxys, cyanobiphenyls, cyanophenyl esters, benzoic acid esters, cyclohexane carboxylic acid phenyl esters, cyanophenylcyclohexanes, cyano-substituted phenylpyrimidines, alkoxy-substituted phenylpyrimidines, phenyl dioxanes, tolans, and alkenyl cyclohexyl benzonitriles are preferably used. Not only a low-molecular liquid crystal compound, but also a high-molecular liquid crystal compound can be used.

The polymerizable liquid crystal compound is obtained by introducing a polymerizable group to a liquid crystal compound. The example of a polymerizable group include an unsaturated polymerizable group, an epoxy group, an aziridinyl group, and an unsaturated polymerizable group is preferable, and an ethylenically unsaturated polymerizable group is particularly preferable. The polymerizable group can be introduced into molecules of the liquid crystal compound by various methods. The number of polymerizable groups having the polymerizable liquid crystal compound is preferably 1 to 6 and more preferably 1 to 3 per molecule. Examples of the polymerizable liquid crystal compound include compounds disclosed in Makromol. Chem., vol. 190, pp. 2255 (1989), Advanced Material, vol. 5, pp. 107 (1993), US4683327A, US5622648A, US5770107A, WO95/022586A, WO95/024455A, WO97/000600A, WO98/023580A, WO98/052905, JP1989-272551A (JP-H01-272551A), JP1994-016616A (JP-H06-016616A), JP1995-110469A (JP-H07-110469A), JP1999-080081A (JP-H11-080081A), and JP2001-328973A. Two or more kinds of polymerizable liquid crystal compounds may be used in combination. In a case where two or more kinds of polymerizable liquid crystal compounds are used in combination, an orientation temperature can be decreased.

The amount of polymerizable liquid crystal compound added into the liquid crystal composition is preferably 80 to 99.9% by mass, more preferably 85 to 99.5% by mass, and particularly preferably 90 to 99% by mass with respect to the mass of solid contents (mass excluding solvent) of the liquid crystal composition.

(Polymerizable Liquid Crystal Compound with Low $\Delta\lambda$)

As noticed from the expression of the half-width $\Delta\lambda$ of the selective reflection band indicating the above selective reflection, the cholesteric liquid crystalline phase is formed by using polymerizable liquid crystal compounds with low $\Delta n$, is fixed to be a film, and then a narrow-band selective reflection layer can be obtained. Examples of polymerizable liquid crystal compounds with low $\Delta n$ include compounds described in WO2015/115390A, WO2015/147243A, WO2016/035873A, JP2015-163596A, and JP2016-053149A. Regarding the liquid crystal composition providing a selective reflection layer having a small half-width, WO2016/047648A can be referred to.

It is also preferable that the liquid crystal compound is a polymerizable compound represented by the following formula (1) described in WO2016/047648A.

$$Q^1-Sp^1-\left[A-L\right]_{m-1}-A-Sp^2-Q^2 \qquad \text{(I)}$$

In the formula, A represents a phenylene group which may have a substituent or a trans-1,4-cyclohexylene group which may have a substituent, L represents a single bond or a linking group selected from the group consisting of $-CH_2O-$, $-OCH_2-$, $-(CH_2)_2OC(=O)-$, $-C(=O)O(CH_2)_2-$, -C(=O)O-, -OC(=O)-, -OC(=O)O-, -CH=CH-C(=O)O-, and -OC(=O)-CH=CH-, m represents an integer of 3 to 12, $Sp^1$ and $Sp^2$ each independently represent a single bond or a linking group selected from the group consisting of a linear or branched alkylene group having 1 to 20 carbon atoms, and a group in which one or two or more $-CH_2-$ is substituted with -O-, -S-, -NH-, $-N(CH_3)-$, -C(=O)-, -OC(=O)-, or -C(=O)O- in a linear or branched alkylene group having 1 to 20 carbon atoms, and $Q^1$ and $Q^2$ each independently represent a polymerizable group selected from the group consisting of a hydrogen atom or a group represented by the following formulae Q-1 to Q-5, where, any one of $Q^1$ or $Q^2$ represents a polymerizable group. In the formulae, * represents a bonding position.

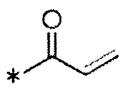
Q-1

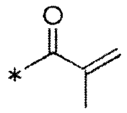
Q-2

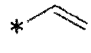
Q-3

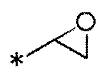
Q-4

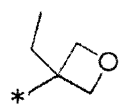
Q-5

In the formula (I), the phenylene group is preferably a 1,4-phenylene group.

Regarding the phenylene group and the trans-1,4-cyclohexylene group, the substituent in a case of "may have a substituent" is not particularly limited, and examples thereof include an alkyl group, a cycloalkyl group, an alkoxy group, an alkyl ether group, an amide group, an amino group, a halogen atom, and a substituent selected from the group

consisting of a group formed by combining two or more of the above substituents. In addition, examples of the substituent include a substituent represented by -C(=O)-$X^3$-$Sp^3$-$Q^3$ described later. The phenylene group and the trans-1,4-cyclohexylene group may have 1 to 4 substituents. In a case where the phenylene group and the trans-1,4-cyclohexylene group have two or more substituents, two or more substituents may be the same as or different from each other.

In the present specification, the alkyl group may be any of linear or branched. The number of carbon atoms of the alkyl group is preferably 1 to 30, more preferably 1 to 10, and particularly preferably 1 to 6. Examples of the alkyl group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, a 1,1-dimethylpropyl group, an n-hexyl group, an isohexyl group, a linear or branched heptyl group, an octyl group, a nonyl group, a decyl group, an undecyl group, or a dodecyl group. The above description regarding the alkyl group is also applied to an alkoxy group including an alkyl group. In the specification, specific examples of the alkylene group which is referred to as an alkylene group include a divalent group obtained by removing any one hydrogen atom from each of the above examples of the alkyl group. Examples of the halogen atom include a fluorine atom, a chlorine atom, a bromine atom and an iodine atom.

In the specification, the number of carbon atoms of the cycloalkyl group is preferably 3 to 20, more preferably 5 or more, and is preferably 10 or less, more preferably 8 or less, still more preferably 6 or less. Examples of the cycloalkyl group include a cyclopropyl group, a cyclobutyl group, a cyclopentyl group, a cyclohexyl group, a cycloheptyl group, and a cyclooctyl group.

As the substituents that the phenylene group and the trans-1,4-cyclohexylene group may have, substituents selected from the group consisting of an alkyl group and an alkoxy group, -C(=O)-$X^3$-$Sp^3$-$Q^3$ are particularly preferable. Here, $X^3$ represents a single bond, -O-, -S-, or -N ($Sp^4$-$Q^4$)-, or represents a nitrogen atom forming a ring structure together with $Q^3$ and $Sp^3$. $Sp^3$ and $Sp^4$ each independently represent a single bond or a linking group selected from the group consisting of a linear or branched alkylene group having 1 to 20 carbon atoms, and a group in which one or two or more -$CH_2$- is substituted with -O-, -S-, -NH-, -N($CH_3$)-, -C(=O)-, -OC(=O)-, or -C(=O)O- in a linear or branched alkylene group having 1 to 20 carbon atoms.

$Q^3$ and $Q^4$ each independently represent a hydrogen atom, a cycloalkyl group, a group in which one or two or more -$CH_2$- is substituted with -O-, -S-, -NH-, -N($CH_3$)-, -C(=O)-, -OC(=O)-, -C(=O)O- in a cycloalkyl group, or any other polymerizable group selected from the group consisting of a group represented by formulae Q-1 to Q-5.

In the cycloalkyl group, a group in which one or two or more -$CH_2$- is substituted with -O-, -S-, -NH-, -N($CH_3$)-, -C(=O)-, -OC(=O)-, or -C(=O)O- specifically includes a tetrahydrofuranyl group, a pyrrolidinyl group, an imidazolidinyl group, a pyrazolidinyl group, a piperidyl group, a piperazinyl group, a morpholinyl group, and the like. The substitution position is not particularly limited. Among these, a tetrahydrofuranyl group is preferable, and a 2-tetrahydrofuranyl group is particularly preferable.

In the formula (I),L represents a single bond or a linking group selected from the group consisting of -$CH_2$O-, -O$CH_2$-, -$(CH_2)_2$OC(=O)-, -C(=O)O$(CH_2)_2$-, -C(=O)O-, -OC(=O)-, -OC(=O)O-, -CH=CH-C(=O)O-, and -OC(=O)-CH=CH-. L is preferably -C(=O)O- or -OC(=O)-. m-1 L's may be the same as or different from each other.

$Sp^1$ and $Sp^2$ each independently represent a single bond or a linking group selected from the group consisting of a linear or branched alkylene group having 1 to 20 carbon atoms, and a group in which one or two or more -$CH_2$- is substituted with -O-, -S-, -NH-, -N($CH_3$)-, -C(=O)-, -OC(=O)-, or -C(=O)O- in a linear or branched alkylene group having 1 to 20 carbon atoms. $Sp^1$ and $Sp^2$ each preferably independently represent a linking group formed by combining one or two or more groups selected from the group consisting of a linear alkylene group having 1 to 10 carbon atoms to which a linking group selected from the group consisting of -O-, -OC(=O)-, and -C(=O)O- is connected, -OC(=O)-, -C(=O)O-, -O-, and a linear alkylene group having 1 to 10 carbon atoms at both terminals respectively, and preferably represent a linear alkylene group having 1 to 10 carbon atoms to which -O- is bonded at both terminals, respectively.

$Q^1$ and $Q^2$ each independently represent a hydrogen atom or a polymerizable group selected from the group consisting of the groups represented by the formulae Q-1 to Q-5, where, either one of $Q^1$ and $Q^2$ represents a polymerizable group.

The polymerizable group is preferably an acryloyl group (Formula Q-1) or a methacryloyl group (Formula Q-2).

In the formula (I), m represents an integer of 3 to 12, preferably an integer of 3 to 9, more preferably an integer of 3 to 7, and still more preferably an integer of 3 to 5.

The polymerizable compound represented by the formula (I) preferably includes at least one phenylene group which may have a substituent as A and at least one trans-1,4-cyclohexylene group which may have a substituent. The polymerizable compound represented by the formula (I) preferably includes 1 to 4 trans-1,4-cyclohexylene groups which may have a substituent as A, more preferably 1 to 3 trans-1,4-cyclohexylene groups, and still more preferably 2 or 3 trans-1,4-cyclohexylene groups. In addition, the polymerizable compound represented by the formula (I) preferably includes one or more phenylene groups which may have a substituent as A, more preferably 1 to 4 phenylene groups, still more preferably 1 to 3 phenylene groups, and particularly preferably 2 or 3 phenylene groups.

In the formula (I), in a case where the number obtained by dividing the number of trans-1,4-cyclohexylene

groups represented by A by m is determined as mc, it is preferably 0.1 < mc < 0.9, more preferably 0.3 < mc < 0.8, and still more preferably 0.5 < mc < 0.7. The liquid crystal composition preferably includes a polymerizable compound represented by the formula (I) in a range of 0.5 < mc <0.7, and a polymerizable compound represented by the formula (I) in a range of 0.1 < mc < 0.3.

Specific examples of the polymerizable compound represented by the formula (I) include compounds described in paragraphs 0051 to 0058 of WO2016/047648A, compounds described in JP2013-112631A, JP2010-070543A, JP4725516B, WO2015/115390A, WO2015/147243A, WO2016/035873A, JP2015-163596A and JP2016-053149A, or the like.

(Chiral Agent: Optically Active Compound)

The chiral agent has a function of inducing a helix structure of a cholesteric liquid crystalline phase. Since the induced sense or pitch of the helix is different depending on the compounds, the chiral compound may be selected according to the purpose.

The chiral agent is not particularly limited and known compounds can be used. Examples of chiral agents are described in Liquid Crystal Device Handbooks (Chapter 3, 4-3, Chiral Agents for TN and STN, p. 199, edited by Japan Society for the Promotion of Science, 142 Committee, 1989), JP2003-287623A, JP2002-302487A, JP2002-080478A, JP2002-080851A, JP2010-181852, or JP2014-034581A.

The chiral agent normally includes asymmetric carbon atoms, but an axially asymmetric compound or a plane asymmetric compound not including asymmetric carbon atoms can also be used. Examples of an axially asymmetric compound or a plane asymmetric compound include binaphthyl, helicene, paracyclophane, and derivatives thereof. The chiral agent may include a polymerizable group. In a case where both the chiral agent and the liquid crystal compound include a polymerizable group, a polymer having a repeating unit derived from the polymerizable liquid crystal compound and a repeating unit derived from the chiral agent can be formed with a polymerization reaction between the polymerizable chiral agent and the polymerizable liquid crystal compound. In this aspect, the polymerizable group of the polymerizable chiral agent is preferably the same group as the polymerizable group of the polymerizable liquid crystal compound. Accordingly, examples of a polymerizable group of the chiral agent include an unsaturated polymerizable group, an epoxy group, and an aziridinyl group, an unsaturated polymerizable group is preferable, and an ethylenically unsaturated polymerizable group is particularly preferable.

In addition, the chiral agent may be a liquid crystal compound.

As the chiral agent, an isosorbide derivative, an isomannide derivative, or a binaphthyl derivative can be preferably used. As the isosorbide derivative, a commercially available product such as LC-756 manufactured by BASF Corporation may be used.

The content of the chiral agent in the polymerizable liquid crystal compound is preferably 0.01 mol% to 200 mol% and more preferably 1 mol% to 30 mol% with respect to the amount of the liquid crystal composition.

(Polymerization Initiator)

The liquid crystal composition preferably includes a polymerization initiator. In an aspect of allowing a polymerization reaction with ultraviolet light irradiation, the polymerization initiator used is preferably a photopolymerization initiator capable of starting a polymerization reaction with ultraviolet light irradiation. Examples of the photopolymerization initiator include $\alpha$-carbonyl compounds (described in each specification of US2367661B and US2367670A), acyloin ethers (described in US2448828A), $\alpha$-hydrocarbon-substituted aromatic acyloin compounds (described in US2722512A), polynuclear quinone compounds (described in US3046127A and US2951758A), combinations of a triarylimidazole dimer and a p-aminophenylketone (described in US3549367A), acridine and phenazine compounds (described in JP1985-105667A (JP-S60-105667A), US4,239,850A), acylphosphine oxide compounds (described in JP1988-040799B (JP-S63-040799B), JP1993-029234B (JP-H5-029234B), JP1998-095788A (JP-H10-095788A), JP1998-029997A (JP-H10-029997A), JP2001-233842A, JP2000-080068A, JP2006-342166A, JP2013-114249A, JP2014-137466A, JP4223071B, JP2010-262028A, JP2014-500852), oxime compounds (described in JP2000-066385A and JP4454067B), and oxadiazole compounds (described in US4212970A), and the like. For example, the description of paragraphs 0500 to 0547 of JP2012-208494A can also be referred to.

As the polymerization initiator, it is also preferable to use the acylphosphine oxide compounds or the oxime compounds.

As the acylphosphine oxide compounds, for example, IRGACURE 810 (compound name: bis(2,4,6-trimethylbenzoyl)-phenylphosphine oxide) which is a commercially available product and manufactured by BASF Japan Ltd. can be used. As examples of the oxime compounds, IRGACURE OXE 01 (manufactured by BASF), IRGACURE OXE 02 (manufactured by BASF), TR-PBG-304 (manufactured by Changzhou Tronly Advanced Electronic Materials Co., Ltd.), Adeka Arkls NCI-930 (manufactured by ADEKA CORPORATION), Adeka Arkls NCI-831 (manufactured by ADEKA

CORPORATION), and the like which are commercially available products can be used.

The polymerization initiator may be used singly or in combination of two or more kinds thereof.

The content of the photopolymerization initiator in the liquid crystal composition is preferably 0.1% by mass to 20% by mass and more preferably 0.5% by mass to 5% by mass with respect to the content of the polymerizable liquid crystal compound.

(Crosslinking Agent)

The liquid crystal composition may optionally include a crosslinking agent, in order to improve the film hardness and durability after the curing. The crosslinking agent which is cured with ultraviolet light, heat, or moisture can be suitably used.

The crosslinking agent is not particularly limited, and can be suitably selected according to the purpose. Examples thereof include a multifunctional acrylate compound such as trimethylolpropane tri(meth)acrylate, or pentaerythritol tri(meth)acrylate; an epoxy compound such as glycidyl (meth)acrylate, or ethylene glycol diglycidyl ether; an aziridine compound such as 2,2-bishydroxymethylbutanol-tris [3- (1-aziridinyl) propionate], or 4,4-bis(ethyleneiminocarbonylamino) diphenylmethane; an isocyanate compound such as hexamethylene diisocyanate or biuret type isocyanate; a polyoxazoline compound including an oxazoline group in a side chain; an alkoxysilane compound such as vinyltrimethoxysilane or N- (2-aminoethyl) 3-aminopropyltrimethoxysilane. In addition, a well-known catalyst can be used in accordance with reactivity of the crosslinking agent, and it is possible to improve the productivity, in addition to the improvement of the film hardness and durability. These may be used singly or in combination of two or more kinds thereof.

The content of the crosslinking agent is preferably 3% by mass to 20% by mass and more preferably 5% by mass to 15% by mass. By setting the content of the crosslinking agent to 3% by mass or more, the effect of improving a crosslinking density can be obtained, and by setting the content of the crosslinking agent 20% by mass or less, a reduction in the stability of the cholesteric liquid crystal layer can be prevented.

(Orientation Controlling Agent)

An orientation controlling agent which contributes to stably or rapidly setting the cholesteric liquid crystal layer as a cholesteric liquid crystal layer having planar orientation, may be added into the liquid crystal composition. Examples of the orientation controlling agent include a fluorine (meth)acrylate-based polymer disclosed in paragraphs [0018] to [0043] of JP2007-272185A and a compound represented by Formulae (I) to (IV) disclosed in paragraphs [0031] to [0034] of JP2012-203237.

The orientation controlling agent may be used singly or in combination of two or more kinds thereof.

The amount of orientation controlling agent added into the liquid crystal composition is preferably 0.01% by mass to 10% by mass, more preferably 0.01% by mass to 5% by mass, and particularly preferably 0.02% by mass to 1% by mass, with respect to the total mass of the polymerizable liquid crystal compound.

(Other Additives)

In addition, the liquid crystal composition may include at least one kind selected from various additives such as a surfactant for adjusting the surface tension of a coated film and setting an even film thickness, a polymerizable monomer, and the like. Further, a polymerization inhibitor, an antioxidant, an ultraviolet absorber, a light stabilizer, a coloring material, and metal oxide fine particles may be further added into the liquid crystal composition, if necessary, in a range not deteriorating the optical performance.

Regarding the cholesteric liquid crystal layer, a cholesteric liquid crystal layer having fixed cholesteric regularity can be formed by applying a liquid crystal composition obtained by dissolving a polymerizable liquid crystal compound, a polymerization initiator, and if necessary, a chiral agent, and a surfactant in a solvent, onto a support, an orientation layer, or a cholesteric liquid crystal layer which is manufactured in advance, drying the liquid crystal composition to obtain a coated film, and irradiating this coated film with active light to allow polymerization of the cholesteric liquid crystal composition. In addition, a laminated film formed of the plurality of cholesteric liquid crystal layers can be formed by repeatedly performing the manufacturing step of the cholesteric liquid crystal layer.

(Solvent)

A solvent used for preparing the liquid crystal composition is not particularly limited, and is suitably selected according to the purpose, and an organic solvent is preferably used.

The organic solvent is not particularly limited, and is suitably selected according to the purpose, and examples thereof include ketones, alkyl halides, amides, sulfoxides, heterocyclic compounds, hydrocarbons, esters, and ethers.

These may be used singly or in combination of two or more kinds thereof. Among these, ketones are particularly preferable, in a case of considering the load on the environment.

(Coating, Orientation, Polymerization)

A method of applying the liquid crystal composition to a support, an orientation layer, and a cholesteric liquid crystal layer which is an underlayer is not particularly limited, and can be suitably selected according to the purpose, and examples thereof include a wire bar coating method, a curtain coating method, an extrusion coating method, a direct gravure coating method, a reverse gravure coating method, a die coating method, a spin coating method, a dip coating method, a spray coating method, and a slide coating method. In addition, the method can also be performed by transferring the liquid crystal composition which is separately applied onto a support. Liquid crystal molecules are oriented by heating the coated liquid crystal composition. A heating temperature is preferably 200°C or less and more preferably 130°C or less. By this orientation treatment, an optical thin film in which the polymerizable liquid crystal compound is twist-oriented so as to have a helix axis in a direction substantially perpendicular to a film surface is obtained.

The oriented liquid crystal compound is further polymerized and thereby the liquid crystal composition can be cured. The polymerization may be any of thermal polymerization and photopolymerization using light irradiation, and photopolymerization is preferable. The light irradiation is preferably performed by using ultraviolet light. An irradiation energy is preferably 20 $mJ/cm^2$ to 50 $J/cm^2$ and more preferably 100 $mJ/cm^2$ to 1,500 $mJ/cm^2$.

In order to promote a photopolymerization reaction, the light irradiation may be performed under the heating conditions or the nitrogen atmosphere. An irradiation ultraviolet light wavelength is preferably 350 nm to 430 nm. A high polymerization reaction rate is preferable, and a reaction rate is preferably 70% or more and more preferably 80% or more, from a viewpoint of stability. A ratio of consumption of a polymerizable functional group is measured by using IR absorption spectra, and thereby the polymerization reaction rate can be determined.

[λ/2 Retardation Layer]

By using the λ/2 retardation layer in combination with the circularly polarized light reflection layer, a projection image can be clearly displayed. The projection image display portion prepared by combining the λ/2 retardation layer and the circularly polarized light reflection layer represents higher brightness than a projection image display portion using, for example, a combination of the λ/4 retardation layer and the circularly polarized light reflection layer. In addition, the generation of double images can be prevented.

A front phase difference of the λ/2 retardation layer may be a length of 1/2 of a visible light wavelength region or "1/2 of the center wavelength x n ± center wavelength (n is an integer)". Particularly, the front phase difference may be a reflection wavelength (for example, any cholesteric liquid crystal layer) of the circularly polarized light reflection layer or a length of 1/2 of the center wavelength of an emission wavelength of a light source. The front phase difference may be, for example, a phase difference in a range of 190 nm to 390 nm and is preferably a phase difference in a range of 200 nm to 350 nm.

The λ/2 retardation layer is not particularly limited, and can be suitably selected according to the purpose, and examples thereof include a stretched polycarbonate film, a stretched norbornene-based polymer film, a transparent film in which inorganic particles having birefringence such as strontium carbonate are included and oriented, a film in which the liquid crystal compound is uniaxially oriented and orientationally fixed, a thin film in which oblique deposition of an inorganic dielectric is performed on a support, and the like.

As the λ/2 retardation layer, a film in which the polymerizable liquid crystal compound is uniaxially oriented and orientationally fixed is preferable. For example, the λ/2 retardation layer can be formed following order. A liquid crystal composition including a polymerizable liquid crystal compound is applied on a temporary support or the surface of the orientation layer, the polymerizable liquid crystal compound in the liquid crystal composition is formed in a nematic orientation in a liquid crystal state, and then the polymerizable liquid crystal compound is fixed by curing to form the λ/2 retardation layer. In this case, forming the λ/2 retardation layer can be carried out in the same manner as forming the cholesteric liquid crystal layer, except that no chiral agent is added to the liquid crystal composition. However, at the time of forming the nematic orientation after applying the liquid crystal composition, heating temperature is preferably 50°C to 120°C, and more preferably 60°C to 100°C.

The λ/2 retardation layer may be a layer formed by applying a composition including a high-molecular liquid crystal compound on the temporary support or the surface of the orientation layer or the like, forming the nematic orientation in a liquid crystal state, cooling the composition, and then obtained by fixing the orientation.

The thickness of the λ/2 retardation layer is preferably 0.2 μm to 300 μm, more preferably 0.5 μm to 150 μm, and still more preferably 1.0 μm to 80 μm. The thickness of the λ/2 retardation layer formed from the liquid crystal composition is not particularly limited, and is preferably 0.2 μm to 10 μm, more preferably 0.5 μm to 5.0 μm, and still more preferably 1.0 μm to 2.0 μm.

The slow axis direction of the λ/2 retardation layer is preferably determined in accordance with the direction of incidence of the incidence ray for displaying a projection image and the sense of a helix of the cholesteric liquid crystal layer, when the windshield glass is used in the head-up display system. For example, in a case where the incidence ray is incident from the of the λ/2 retardation layer side (in the specification, referred to as "from the observer side") with respect to the circularly polarized light reflection layer which is downwards (vertically downwards) of a projection image display portion, the slow axis of the λ/2 retardation layer is preferably in a range of +40° to +65° or in a range of -40° to -65° with respect to an upper vertical direction of the projection image display portion. In addition, the slow axis direction is preferably set as follows, in accordance with the sense of the helix of the cholesteric liquid crystal layer in the circularly polarized light reflection layer. In a case where the sense is right (preferably, in a case where all of the sense of the cholesteric liquid crystal layers are right), the slow axis of the λ/2 retardation layer is clockwise viewed from the observer side in a range of 40° to 65° with respect to the upper vertical direction of the projection image display portion and preferably in a range of 45° to 60°. In a case where the sense is left (preferably, in a case where all of the sense of the cholesteric liquid crystal layers are left), the slow axis of the λ/2 retardation layer is anticlockwise viewed from the observer side in a range of 40° to 65° with respect to the upper vertical direction of the projection image display portion and preferably in a range of 45° to 60°.

[Second Retardation Layer]

The projection image display portion on the windshield glass of the invention may include a second retardation layer in addition to the λ/2 retardation layer. The second retardation layer may be provided so that the λ/2 retardation layer, the circularly polarized light reflection layer, and the second retardation layer are arranged in this order. In particular, the λ/2 retardation layer, the circularly polarized light reflection layer, and the second retardation layer may be provided in this order from the observer side. In this specification, even in a case where the second retardation layer has a λ/2 phase difference, it is referred to as a second retardation layer distinguished from the λ/2 retardation layer closer to the observer side than the second retardation layer having a λ/2 phase difference. By including the second retardation layer at the above position, it is possible to further prevent the generation of double images. In particular, it is possible to further prevent the generation of double images in a case of allowing p-polarized light to incident to form a projection image. The effect is more prominent in a case where the polymerizable liquid crystal compound with low Δn is used for forming the cholesteric liquid crystal layer in the circularly polarized light reflection layer.

The reason why the generation of double images can be further prevented by utilizing the second retardation layer is presumed that light having a wavelength not in the selective reflection band of the cholesteric liquid crystal layer included in the circularly polarized light reflection layer is polarized and changed through the cholesteric liquid crystal layer, and reflected on the back surface of the windshield glass, and based on the reflection, the generation of double images can be further prevented.

The phase difference of the second retardation layer may be appropriately adjusted in a range of 160 nm to 460 nm at a wavelength of 550 nm, preferably in a range of 240 nm to 420 nm.

Materials and a thickness or the like of the second retardation layer can be selected within the same range as the λ/2 retardation layer.

The slow axis direction of the second retardation layer is preferably determined in accordance with a incidence direction of incidence light for displaying the projection image and a sense of a helix of the cholesteric liquid crystal layer. For example, in the second retardation layer having a phase difference in a range of 160 nm to 400 nm at a wavelength of 550 nm, it is preferable that the slow axis is in a range of +10° to +35°, or in a range of -10° to -35° with respect to the upper vertical direction of the projection image display portion. Alternatively, in the second retardation layer having a phase difference in a range of 200 nm to 400 nm at a wavelength of 550 nm, it is preferable that the slow axis is in a range of +100° to +140°, or in a range of -100° to -140° with respect to the upper vertical direction of the projection image display portion.

[Other layers]

The projection image display portion or the half-mirror film may include layers other than the cholesteric liquid crystal layer, the λ/2 retardation layer, and the second retardation layer. All of the other layers are preferably transparent in a visible light region. In the specification, the expression "being transparent in a visible light region" means that the transmittance of visible light is 70% or more.

In addition, all of the other layers preferably have a low birefringence. In the specification, the expression "low birefringence" means that the front phase difference in a wavelength region where the projection image display portion in the windshield glass of the invention shows reflection is 10 nm or less, and the front phase difference is preferably 5 nm or less. In addition, all of the other layers preferably have a small difference in a refractive index from an average refractive index (in-plane average refractive index) of the cholesteric liquid crystal layer. Examples of the other layers

include a support, an orientation layer, and an adhesive layer.

(Support)

The support can be a substrate in forming a cholesteric liquid crystal layer or a λ/2 retardation layer.
The support is not particularly limited. The support used for forming the cholesteric liquid crystal layer or the λ/2 retardation layer may be a temporary support which is peeled off after forming the cholesteric liquid crystal layer, and may not be included in the completed half-mirror film or the windshield glass. Examples of the support include plastic films of polyester such as polyethylene terephthalate (PET), polycarbonate, an acrylic resin, an epoxy resin, polyurethane, polyamide, polyolefin, cellulose derivative, and silicone. As the temporary support, glass may be used in addition to the plastic films.
A thickness of the support may be approximately 5.0 μm to 1,000 μm, is preferably 10 μm to 250 μm and more preferably 15 μm to 90 μm.

(Orientation Layer)

The projection image display portion may include an orientation layer as an underlayer onto which the liquid crystal composition is applied when forming the cholesteric liquid crystal layer or the λ/2 retardation layer.
The orientation layer may be provided by methods such as a rubbing treatment of an organic compound (resin such as polyimide, polyvinyl alcohol, polyester, polyallylate, polyamideimide, polyetherimide, polyamide, and modified polyamide) such as a polymer, oblique vapor deposition of an inorganic compound, formation of a layer having a microgroove, or accumulation of an organic compound (for example, ω-tricosanoic acid, dioctadecyl methyl ammonium chloride, and methyl stearate) by using a Langmuir-Blodgett technique (LB film). In addition, an orientation layer exhibiting an orientation function by applying an electric field, applying a magnetic field, or light irradiation may be used.
Particularly, an orientation layer formed of a polymer is preferably subjected to the rubbing treatment, and the liquid crystal composition is preferably applied onto the surface subjected to the rubbing treatment. The rubbing treatment can be performed by rubbing a surface of a polymer layer in a constant direction with paper or cloth several times.
The liquid crystal composition may be applied to the surface of the support or the surface of the support which is subjected to the rubbing treatment, without providing the orientation layer.
In a case of forming a liquid crystal layer by using the temporary support, the orientation layer may be peeled off with the temporary support and may not be a layer configuring the projection image display portion.
A thickness of the orientation layer is preferably 0.01 to 5.0 μm and more preferably 0.05 to 2.0 μm.

(Adhesive Layer)

The adhesive layer may be provided, for example, between the cholesteric liquid crystal layers, between the circularly polarized light reflection layer and the λ/2 retardation layer, between the circularly polarized light reflection layer and the second retardation layer, and between the cholesteric liquid crystal layer and the support. Furthermore, the adhesive layer may be provided between the circularly polarized light reflection layer and an intermediate film sheet, between the λ/2 phase retardation layer and the intermediate film sheet, or the like.

The adhesive layer may be formed of an adhesive.

From a viewpoint of a curing method, the adhesive includes a hot melt type adhesive, a thermosetting adhesive, a photocuring adhesive, a reaction curing type adhesive, and pressure-sensitive type adhesive which does not need curing. As materials, acrylate-based, urethane-based, urethane acrylate-based, epoxy-based, epoxy acrylate-based, polyolefin-based, modified olefin-based, polypropylene-based, ethylene vinyl alcohol-based, vinyl chloride-based, chloroprene rubber-based, cyanoacrylate-based, polyamide-based, polyimide-based, polystyrene-based, polyvinylbutyral-based compounds can be used. From viewpoints of workability and productivity, a photocuring method is preferable as a curing method, and from viewpoints of optical transparency and heat resistance, the acrylate-based, urethane acrylate-based, and epoxy acrylate-based compounds are preferably used as the material.
The adhesive layer may be formed using a highly transparent adhesive transfer tape (OCA tape). A commercially available product for an image display device, in particular, a commercially available product for the surface of the image display portion of an image display device may be used as the highly transparent adhesive transfer tape. Examples of commercially available products include pressure sensitive adhesive sheets (such as PD-S1) manufactured by Panac Co., Ltd., and pressure sensitive adhesive sheets of MHM series manufactured by NICHIEI KAKOH CO., LTD..
A thickness of the orientation layer is preferably 0.5 to 10 μm and more preferably 1.0 to 5.0 μm. The thickness of the adhesive layer formed by using the OCA tape may be 10 μm to 50 μm, preferably 15 μm to 30 μm. The adhesive

layer is preferably provided to have an even film thickness, in order to reduce the color unevenness and the like of the projection image display portion.

[Layer on Visible Side with respect to Circularly Polarized Light Reflection Layer]

A problem regarding a double image (or a multiple image) occurs due to the superimposition of an image formed by reflected light from a layer reflecting the projected light and an image formed by the reflected light from the front surface or rear surface of the projection image display member, when seen from the light incidence side, in the projection image display member. In the windshield glass of the invention, light transmitted through the cholesteric liquid crystal layer in the circularly polarized light reflection layer is a circularly polarized light having a sense opposite to the sense of the circularly polarized light reflected by the cholesteric liquid crystal layer, and the reflected light from the rear surface is mostly circularly polarized light reflected on the cholesteric liquid crystal layer, in a case where the layer on the rear surface side with respect to the circularly polarized light reflection layer has a low birefringence. Thus, a significant double image is hardly generated. Particularly, by using polarized light as projected light, most of the projected light can be configured to be reflected on the circularly polarized light reflection layer. Meanwhile, the reflected light from the front surface may generate a significant double image. Particularly, when the distance between the center of gravity of the cholesteric liquid crystal layer and a front surface when seen from the light incidence side of the windshield glass is a certain value or more, a double image is significantly generated. Specifically, in the structure of the windshield glass of the invention, the total thickness (not including the thickness of the circularly polarized light reflection layer and including the thickness of the λ/2 retardation layer) of the layers on the λ/2 retardation layer side from the circularly polarized light reflection layer, that is a distance from the outermost surface on the λ/2 retardation layer side of the circularly polarized light reflection layer to the outermost surface of the windshield glass on the λ/2 retardation layer side with respect to the circularly polarized light reflection layer, from the viewpoint of reducing the generation of double images, is preferably 2.0 mm or less, more preferably 1.0 mm or less, and particularly preferably 0.5 mm or less. The layers on the visible side with respect to the circularly polarized light reflection layer include the support, the intermediate film sheet, and the second glass plate in addition to the λ/2 retardation layer.

However, in the projection image display using p-polarized light on the windshield glass of the invention described later, even in a case where the total thickness of the layers on the visible side with respect to the circularly polarized light reflection layer is as described above, a projection image can be visible without a significant double image.

[Laminated Glass]

The windshield glass may have a laminated glass configuration. That is, the laminated glass preferably has a structure in which two glass plates are bonded to each other and an interlayer interposed therebetween. In the specification, in the windshield glass, a glass plate which is at a position farther from an observer side may be referred to as a first glass plate and a glass plate which is at a position closer to the incidence side may be referred to as a second glass plate.

As the glass plate, a glass plate which is generally used in the windshield glass can be used. The thickness of the glass plate is not particularly limited, and may be approximately 0.5 mm to 5.0 mm and is preferably 1.0 mm to 3.0 mm and more preferably 2.0 to 2.3 mm.

The windshield glass having the laminated glass structure can be manufactured by using a well-known manufacturing method of the laminated glass. In general, the laminated glass can be manufactured by a method of interposing the intermediate film sheet for laminated glass between two glass plates, repeating a heating process and a pressurizing process (process using a rubber roller and the like) several times, and finally performing the heating process under a pressurized condition by using an autoclave.

The windshield glass, which has a laminated glass structure that includes the half-mirror film included in the interlayer and including the circularly polarized light reflection layer and the λ/2 retardation layer, may be formed through a typical laminated glass manufacturing process after forming a half-mirror film on the surface of the glass plate, or may be formed by using a laminated intermediate film sheet for the laminated glass which includes the half-mirror film as an intermediate film sheet, and by performing the above heating process and pressurizing process. In a case of forming the half-mirror film on the surface of the glass plate, the glass plate forming the half-mirror film may be the first glass plate or the second glass plate. In this case, the half-mirror film may be attached to, for example, the glass plate with an adhesive.

(Intermediate Film Sheet)

Any well-known intermediate film sheet may be used as the intermediate film sheet in a case of using the intermediate film sheet not including the half-mirror film. For example, a resin film including a resin selected from the

group consisting of polyvinylbutyral (PVB), an ethylene-vinyl acetate copolymer, and a chlorine-containing resin can be used. The resin is preferably a main component of the intermediate film sheet. The main component means a component occupying the intermediate film sheet with the content 50% by mass or more.

Among the resins, polyvinylbutyral or an ethylene-vinyl acetate copolymer is preferable, and polyvinylbutyral is more preferable. The resin is preferably a synthesis resin.

Polyvinylbutyral can be obtained by acetalizing polyvinyl alcohol with butyraldehyde. A preferable lower limit of the degree of acetalizing of the polyvinylbutyral is 40%, a preferable upper limit thereof is 85%, a more preferable lower limit thereof is 60%, and a more preferable upper limit is 75%.

The polyvinyl alcohol is normally obtained by saponification of polyvinyl acetate, and polyvinyl alcohol having a degree of saponification of 80 to 99.8 mol% is generally used.

In addition, a preferable lower limit of the degree of polymerization of the polyvinyl alcohol is 200 and a preferable upper limit thereof is 3,000. In a case where the degree of polymerization of polyvinyl alcohol is 200 or more, the penetration resistance of the obtained laminated glass is unlikely to be lowered. In a case where the degree is 3000 or less, the resin film has good moldability, and the rigidity of the resin film does not become too large. Thus, a good workability is achieved. A more preferable lower limit thereof is 500 and a more preferable upper limit is 2,000.

(Intermediate Film Sheet including Circularly Polarized Light Reflection Layer and $\lambda/2$ Retardation Layer)

The laminated intermediate film sheet for laminated glass including the circularly polarized light reflection layer and the $\lambda/2$ retardation layer can be formed by bonding the half-mirror film to the surface of the intermediate film sheet. Alternatively, the laminated intermediate film sheet for the laminated glass can also be formed by interposing the half-mirror film between the two intermediate film sheets. The two intermediate film sheets may be the same as each other or different from each other, and the same intermediate film sheets are preferable.

A well-known bonding method can be used in the bonding of the half-mirror film and the intermediate film sheet to each other, and laminate treatment is preferably used. In a case of performing the laminate treatment, it is preferable that the laminate treatment is performed under heated and pressurized conditions to some extent, so that the laminate and the intermediate film sheet are not peeled off from each other after the process.

In order to stably perform the laminating, a film surface temperature of a side of the intermediate film sheet to be bonded is preferably 50°C to 130°C and more preferably 70°C to 100°C.

The pressurization is preferably performed at the time of laminating. The pressurization condition is preferably lower than 2.0 kg/cm$^2$ (less than 196 kPa), more preferably in a range of 0.5 to 1.8 kg/cm$^2$ (49 kPa to 176 kPa), and still more preferably 0.5 to 1.5 kg/cm$^2$ (49 kPa to 147 kPa).

In addition, in the half-mirror film including the support, the support may be peeled off, at the same time as the laminating, immediately after the laminating, or immediately before the laminating. That is, the support may not be included in the laminated intermediate film sheet obtained after the laminating.

An example of a manufacturing method of the laminated intermediate film sheet for laminated glass includes: (1) a first step of bonding a half-mirror film to the surface of a first intermediate film sheet to obtain a first laminate; and (2) a second step of bonding a second intermediate film sheet to the surface of the half-mirror film in the first laminate, opposite to the surface to which the first intermediate film sheet is bonded.

By using the method of manufacturing a laminated intermediate film sheet for laminated glass, in which, in the first step, an half-mirror film and the first intermediate film sheet are bonded to each other and the support is peeled off, and in the second step, the second intermediate film sheet is bonded to the surface from which the support is peeled off, the laminated intermediate film sheet for laminated glass which does not include the support can be prepared. Therefore, by using the laminated intermediate film sheet for laminated glass, the laminated glass which does not include the support can be easily prepared. In order to peel off the support stably without breakage or the like, the temperature of the substrate in a case of peeling off the support from the half-mirror film is preferably 40°C or more, and more preferably 40°C to 60°C.

<Head-Up Display System>

The windshield glass of the invention can be used as a constituent member of a head-up display system. The head-up display system includes a projector.

[Projector]

In the specification, the "projector" is an "apparatus which projects light or a screen image" and includes an "apparatus which projects a drawn image". In the head-up display system of the invention, the projector may be disposed so that incidence ray can be incident on the projection image display portion on the windshield glass at an oblique

incidence angle of 45° to 70° with respect to the normal line of the projection image display portion.

In the head-up display system, the projector includes a drawing device, and preferably performs a reflection display of a screen image (actual image) drawn on a small-sized intermediate image screen as a virtual image, by a combiner.

(Drawing device)

The drawing device may itself be a device displaying a screen image or a device emitting light capable of drawing a screen image. In the drawing device, light from the light source may be adjusted by a drawing method such as an optical modulator, laser luminance modulation means, light deflection means for drawing or the like. In the specification, the drawing device includes a light source, and means a device including an optical modulator, laser luminance modulation means, light deflection means for drawing or the like according to the drawing method.

(Light Source)

The light source is not particularly limited, and LEDs (including light emitting diodes, organic light emitting diodes (OLEDs)), a discharge tube, a laser light source, and the like can be used. Among these, LEDs and a discharge tube are preferred. This is because the LEDs and the discharge tube are suitable for a light source of a drawing device that emits linearly polarized light. Among these, LEDs are particularly preferable. As the emission wavelength is not continuous in the visible light region, LEDs are suitable for combination with a combiner in which a cholesteric liquid crystal layer exhibiting selective reflection in a specific wavelength region is used as described later.

(Drawing Method)

The drawing method can be selected according to the light source and usage, and is not particularly limited.

Examples of the drawing method include a fluorescent display tube, a liquid crystal display (LCD) method using a liquid crystal, a liquid crystal on silicon (LCOS) method, DLP (Digital Light Processing) (registered trademark) method, a scanning method using a laser and the like. The drawing method may be a method using a fluorescent display tube integrated with a light source.

In the LCD method and the LCOS method, light beams having respective colors are modulated and multiplexed by the optical modulator, and a light beam is emitted from a projection lens.

The DLP method is a display system using a digital micromirror device (DMD), in which micromirrors corresponding to the number of pixels are arranged, the drawing is performed and light is emitted from the projection lens.

The scanning method is a method of scanning a screen with light rays and imaging using an afterimage in eyes. For example, the description of JP1995-270711A (JP-H7-270711A) and JP2013-228674A can also be referred to. In the scanning method using the laser, a luminance modulated laser beam having respective colors (for example, red light, green light, and blue light) may be bundled into one light beam by a multiplexing optical system or a condenser lens, the scanning may be performed with the light beam by the light deflection means, and the light beam may be drawn on an intermediate image screen to be described later.

In the scanning method, the luminance modulation of a laser beam having respective colors (for example, red light, green light, and blue light) may be performed directly by changing an intensity of the light source, or may be performed by an external modulator. The light deflecting means include a galvanometer mirror, a combination of a galvanometer mirror and a polygon mirror, or a micro electro mechanical system (MEMS), and the MEMS is preferable. The scanning method includes a random scan method, a raster scan method, or the like, and it is preferable to use a raster scan method. In the raster scan method, the laser beam can be driven, for example, with a resonance frequency in a horizontal direction and with a saw-tooth wave in a vertical direction. Since the scanning method does not require the projection lens, it is easy to miniaturize the device.

Light emitted from the drawing device may be linearly polarized light or natural light (non-polarized light). Light emitted from the drawing device included in the head-up display system of the invention is preferably linearly polarized light. In a drawing device using a drawing method of the LCD or the LCOS and a drawing device using a laser light source, light emitted from the drawing device is essentially linearly polarized light. In the case where a drawing device in which the emitted light is linearly polarized light and includes light beams having a plurality of wavelengths (colors), the polarization directions (transmission axis directions) of polarized light in a plurality of light beams are preferably the same or orthogonal to each other. It is known that commercially available drawing devices have non-uniform polarization directions in wavelength regions of red light, green light, and blue light included in the emitted light (refer to JP2000-221449A). Specifically, an example is known that the polarization direction of the green light is orthogonal to the polarization direction of the red light and the polarization direction of the blue light.

(Intermediate Image Screen)

As described above, the drawing device may use an intermediate image screen. In the specification, the "intermediate image screen" is a screen on which a screen image is drawn. That is, in a case where light emitted from the drawing device is not yet visible as a screen image, the drawing device forms a screen image visible on the intermediate image screen using the light. The screen image drawn on the intermediate image screen may be projected on the combiner by light transmitted through the intermediate image screen, and may be reflected on the intermediate image screen and then projected on the combiner.

Examples of the intermediate image screen include a scattering film, a microlens array, a screen for rear projection, and the like. In a case where a plastic material is used as the intermediate image screen, assuming that the intermediate image screen has birefringence, a polarization plane and a light intensity of the polarized light incident on the intermediate image screen are in disorder, and color unevenness or the like is likely to occur in the combiner. However, by using a retardation film having a predetermined phase difference, the problem of generating color unevenness can be reduced.

It is preferable that the intermediate image screen has a function of spreading and transmitting an incidence ray. This is because an enlarged projection image can be displayed. An example of the intermediate image screen includes a screen composed of a microlens array. The microarray lens used in the head-up display is described in, for example, JP2012-226303A, JP2010-145745A, and JP2007-523369A.

The projector may include a reflecting mirror which adjusts an optical path of projected light formed by the drawing device.

As the head-up display system using the windshield glass as the projection image display member, descriptions disclosed in JP1990-141720A (JP-H02-141720A), JP1998-096874A (JP-H10-096874A), JP2003-98470A, US5013134A, and JP2006-512622A can be referred to.

The windshield glass of the invention is particularly effective for a head-up display system used in combination with a projector using a laser, an LED, or an OLED in which an emission wavelength is not continuous in a visible light region as a light source. This is because, the center wavelength of selective reflection of the cholesteric liquid crystal layer can be adjusted in accordance with each emission wavelength. In addition, the windshield glass can also be used for projection of a display such as a liquid crystal display device (LCD) in which display light is polarized.

[Projected light (Incidence ray)]

The incidence ray is incident from the λ/2 retardation layer side with respect to the circularly polarized light reflection layer, and may be incident to the circularly polarized light reflection layer through the λ/2 retardation layer. That is, the λ/2 retardation layer may be disposed on the incidence side on which the projected light is incident with respect to the circularly polarized light reflection layer. The incidence ray is incident at an oblique angle of incidence of 45° to 70° with respect to the normal line of the projection image display portion. A Brewster's angle at an interface between the glass having a refractive index of approximately 1.51 and the air having a refractive index of 1 is approximately 56°. The p-polarized light is allowed to incident in the range of the angle, and thereby the amount of the reflected light which is reflected from the surface of the λ/2 retardation layer with respect to the circularly polarized light reflection layer and from which the incidence ray for the projection image display is reflected is small. Therefore, it is possible to perform an image display with a decreased effect of a double image. The angle is also preferably set as 50° to 65°. At this time, a configuration in which an observation of the projection image can be performed at an angle of 45° to 70°, preferably 50° to 65° on a side opposite to a side on which light is incident, with respect to the normal line of the λ/2 retardation layer in the incidence side of projected light, is preferable.

The incidence ray may be incident in any direction of upwards, downwards, rightwards, and leftwards of the windshield glass, and may be determined in accordance with the direction of an observer. For example, the projected light may be incident at an oblique angle of incidence from the bottom at the time of use.

Further, the slow axis of the λ/2 retardation layer in the windshield glass preferably forms an angle of 40° to 65° with respect to the vibration direction of the incident p-polarized light (incident surface of incidence ray) and more preferably forms an angle of 45° to 60°.

As described above, the projected light at the time of displaying the projection image on the head-up display is preferably p-polarized light vibrating in the direction parallel to the incident surface. In a case where the light emitted from the projector is not a linearly polarized light, the projected light may be set as p-polarized light by using a linearly polarizing film disposed on the side of the emitted light of the projector, or the light may be set as p-polarized light on an optical path between the projector and the windshield glass. As described above, in a projector whose polarization direction is not uniform in the wavelength regions of red light, green light, and blue light of the emitted light, the polarization direction is preferably selectively adjusted, and p-polarized light is incident in all color wavelength regions.

The head-up display system may be a projection system in which the virtual image forming position is variable.

Such a projection system is described in, for example, JP2009-150947A. The virtual image forming position is variable so that the driver can visually confirm the virtual image more comfortably and conveniently. The virtual image forming position is a position at which the driver of the vehicle can visually confirm a virtual image, and for example, a position located more than 1000 mm away from the front of the windshield glass as seen from a normal driver. Here, in a case where the glass is non-uniform (wedge-shaped) at the projection image display portion as described in the above-mentioned JP2011-505330A, assuming that the virtual image forming position is changed, it is necessary to change the angle of the wedge-shaped. Therefore, for example, as described in JP2017-015902A, it is necessary to respond artificially to the change of the virtual image forming position by partially changing the angle of the wedge shape to change the projection position. In the head-up display system using the windshield glass of the invention and constructed by using p-polarized light as described above, it is unnecessary to use a wedge-shaped glass, and the thickness of the glass is uniform at the projection image display portion. Therefore, it is possible to suitably adopt a projection system in which the virtual image forming position is variable.

[Examples]

Hereinafter, the invention will be described more specifically with reference to the examples. Materials, reagents, amounts of substances and percentages thereof, and operations shown in the following examples can be suitably changed within a range not departing from the gist of the invention. Therefore, the ranges of the invention are not limited to the following examples.

<Preparation of λ/2 Retardation Layer>

A rubbing treatment was applied to the surface of Cosmoshine A-4100 (PET, thickness 75 μm) manufactured by Toyobo Co., Ltd., which was not subjected to easy adhesion treatment, and the coating solution 1 shown in Table 1 was applied at room temperature using a wire bar so as to obtain a dry film thickness of 1.8 μm after drying. In the coating solution 1 shown in Table 1, MEK (methyl ethyl ketone) was used as a solvent, and the solvent amount was adjusted so that the concentration of solid contents was 39% by mass. After drying the coating layer at room temperature for 30 seconds, the coating layer was heated in an atmosphere at 85°C for 2 minutes, and thereafter UV irradiation was performed at 60°C for 6 to 12 seconds using a D valve (lamp of 90 mW/$cm^2$) manufactured by Fusion Inc. at a power of 60% to prepare a liquid crystal layer, and then a λ/2 retardation layer with a PET base was obtained.

[Table 1]

Table 1: Applying coating solution to λ/2 retardation layer

| | | Coating solution 1 |
|---|---|---|
| Liquid crystal compound 1 | Compound 1 | 80 |
| Liquid crystal compound 2 | Compound 2 | 20 |
| Polymerization initiator | IRGACURE-OXE 01 (manufactured by BASF Corporation) | 1 |
| Orientation controlling agent | Compound 3 | 0.07 |
| Orientation controlling agent | Compound 4 | 0.03 |
| nits in the table are parts by mass. | | |

Compound 1

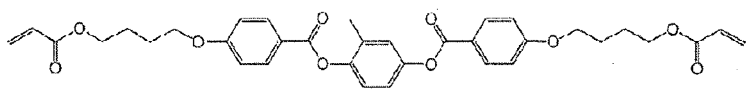

Compound 2

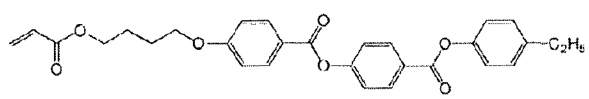

Compound 3 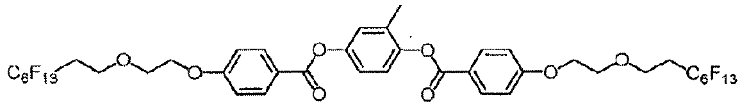

Compound 4 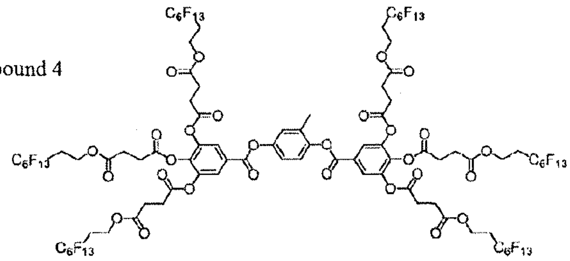

<Preparation of Reflection Layer UV (Cholesteric Liquid Crystal Layer with Shorter Wavelength)>

On the λ/2 retardation layer, the coating solution UV shown in Table 2 was applied at room temperature using a wire bar so as to obtain a dry film thickness of 3 μm after drying. In the coating solution UV, the coating solution B, the coating solution G, the coating solution R and the coating solution IR shown in Table 2, the solvent was used as a mixed solution of methyl acetate and cyclohexanone in a ratio of 8 to 2, and the concentration of solid contents was adjusted to be 25% by mass. After drying the coating layer at room temperature for 30 seconds, the coating layer was heated in an atmosphere at 85°C for 2 minutes, and thereafter UV irradiation was performed at 60°C for 6 to 12 seconds using a D valve (lamp of 90 mW/cm$^2$) manufactured by Fusion Inc. at a power of 60% to prepare a liquid crystal layer, and then a reflection layer UV with a PET base was obtained.

<Preparation of Reflection Layer B, Reflection Layer G, Reflection Layer R, IR Layer>

Using the coating solution B, the coating solution G, the coating solution R and the coating solution IR shown in Table 2 in place of the coating solution UV respectively, Cosmoshine A-4100 (PET, thickness 75 μm) manufactured by Toyobo Co., is coated at room temperature by using a wire bar so that the thickness of the layer after drying became the thickness shown in Table 3, and a reflection layer B, a reflection layer G, a reflection layer R, and an IR layer were prepared in the same manner as in the preparation of the reflection layer UV, respectively.

[Table 2]

Table 2: Applying coating solution to reflection layer

| | | Coating solution UV | Coating solution B | Coating solution G | Coating solution R | Coating solution IR |
|---|---|---|---|---|---|---|
| Liquid crystal compound 101 | Rod-shaped liquid crystal compound 101 | 55 | 55 | 55 | 55 | 55 |
| Liquid crystal compound 102 | Rod-shaped liquid crystal compound 102 | 30 | 30 | 30 | 30 | 30 |
| Liquid crystal compound 201 | Rod-shaped liquid crystal compound 201 | 13 | 13 | 13 | 13 | 13 |
| Liquid crystal compound 202 | Rod-shaped liquid crystal compound 202 | 2 | 2 | 2 | 2 | 2 |
| Polymerization initiator | IRGACURE-OXE 01 (manufactured by BASF Corporation) | 1 | 1 | 1 | 1 | 1 |

(continued)

| | | Coating solution UV | Coating solution B | Coating solution G | Coating solution R | Coating solution IR |
|---|---|---|---|---|---|---|
| Orientation controlling agent | Compound 3 | 0.02 | 0.005 | 0.005 | 0.005 | 0.005 |
| Orientation controlling agent | Compound 5 | 0.01 | 0.005 | 0.005 | 0.005 | 0.015 |
| Chiral agent | Paliocolor LC-756 (manufactured by BASF Corporation) | 5.6 | 4.5 | 3.8 | 3.4 | 2.8 |
| Units in the table are parts by mass. | | | | | | |

Rod-shaped liquid crystal compound 101

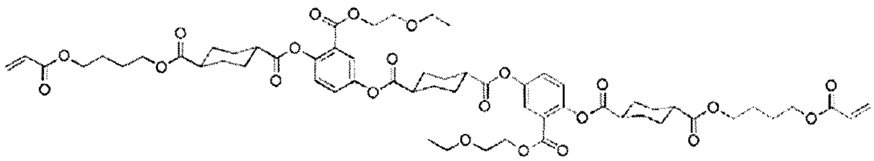

Rod-shaped liquid crystal compound 102

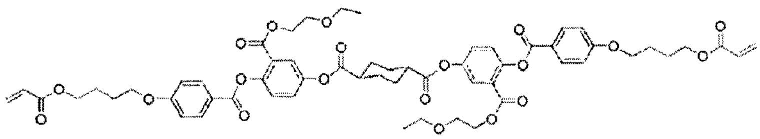

Rod-shaped liquid crystal compound 201

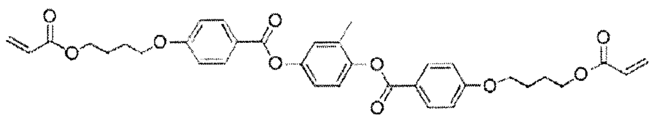

Rod-shaped liquid crystal compound 202

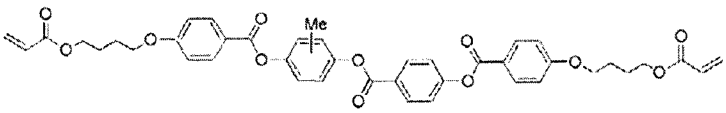

Compound 5

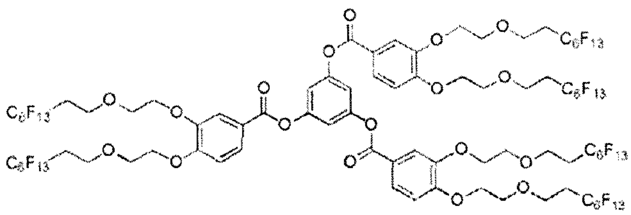

IRGACURE-OXE01 (manufactured by BASF Corporation)

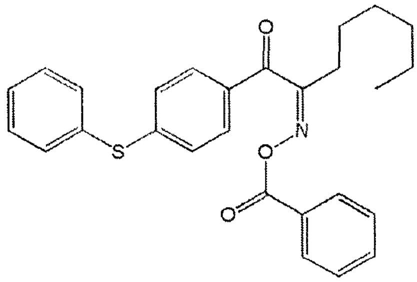

The center wavelength of selective reflection with respect to an incidence ray (normal incidence) from the normal direction with respect to the reflection layer surface of the obtained laminate and a incidence ray tilted 60° from the normal direction, and the sense of the circularly polarized light in reflected light are confirmed. Measurement of the center wavelength was carried out using a spectrophotometer V-670 manufactured by JASCO Corporation. In addition, the sense of the circularly polarized light in the reflected light was determined by installing a circularly polarizing plate in which the sense of the circularly polarized light reflecting selectively is known on a light receiving side of the spectrophotometer and measuring a reflected light intensity.

In addition, the phase difference of the λ/2 retardation layer with respect to light having a wavelength of 550 nm was measured by the following procedure. The OCA tape (MHM-UVC 15 manufactured by NICHIEI KAKOH CO., LTD.) was attached to an acrylic plate (thickness 0.2 mm, 40 mm square). The peeling film of the OCA tape was peeled off and the λ/2 retardation layer with the PET base was attached to the OCA tape in a manner that the surface of the λ/2 retardation layer side is bonded to the OCA tape. The PET was peeled off to prepare a λ/2 retardation layer with the acrylic plate. The phase difference of the λ/2 retardation layer with the acrylic plate was measured using AxoScan manufactured by Axometrics Inc., and the measured value is set as the phase difference of the λ/2 retardation layer.

The results are shown in Table 3.

[Table 3]

Table 3: Thickness and optical properties of each layer

| Layer name | UV | B | G | R | IR | λ/2 |
|---|---|---|---|---|---|---|
| Thickness of layer (μm) | 3 | 3.5 | 4 | 4.5 | 5 | 1.8 |
| Center wavelength of selective reflection (normal incidence) (nm) | 450 | 540 | 633 | 740 | 835 | - |
| Center wavelength of selective reflection (60°) (nm) | 380 | 450 | 530 | 610 | 690 | - |
| Sense of reflected circularly polarized light | Right | Right | Right | Right | Right | - |
| Front phase difference (in 550 nm) (nm) | - | - | - | - | - | 310 |

<Preparation of Half-Mirror Films HM-1 to HM-3>

The reflection layer UV, the reflection layer B, the reflection layer G, the reflection layer R, and the IR layer were formed on the surface of the λ/2 retardation layer side of the λ/2 retardation layer with the PET base prepared in the same manner as described above, in combination and in lamination order shown in Table 4, and then half-mirror films HM-1 to HM-3 were prepared. In formation of each of layers, the coating solution for forming each layer is applied on the λ/2 retardation layer or the reflection layer so that the thickness of the layer after drying became the thickness shown in Table 3 in the same manner as described above, and thereafter drying and UV irradiation were carried out in the same manner as described above.

[Table 4]

Table 4: Configuration of half-mirror film

| | HM-1 | HM-2 | HM-3 |
|---|---|---|---|
| Retardation layer | λ/2 | λ/2 | λ/2 |
| Reflection layer 1 | UV | UV | B |
| Reflection layer 2 | B | B | G |
| Reflection layer 3 | G | G | R |
| Reflection layer 4 | R | R | None |
| Reflection layer 5 | None | IR | None |

<Examples 1 and 2, Comparative Examples 1 and 2>

Preparation of Windshield Glass of Example 1

An adhesive layer (OCA tape: MHM-UVC 15 manufactured by NICHIEI KAKOH CO., LTD.) was adhered to a glass plate having a length of 40 cm, a width of 25 cm and a thickness of 2 mm, and then the half-mirror film HM- 1 prepared above was adhered to the OCA tape by using a roller so that the reflection layer was on the glass surface side. The PET which was the base of the retardation layer was peeled off, a PVB (polyvinylbutyral) which has a thickness of 0.38 mm manufactured by Sekisui Chemical Co., Ltd. and which is cut into the same shape was installed, and then a glass plate having a length of 40 cm, a width of 25 cm and a thickness of 3 mm is installed thereon. At this time, the slow axis direction of the retardation layer in the half-mirror film HM-1 was arranged so as to be 60° in the clockwise direction with reference to the short side direction of the glass as viewed from the glass side having a thickness of 2 mm. This laminate was held at 90°C and 0.1 atm for 1 hour and heated at 115°C and 13 atm for 20 minutes to remove bubbles, and then the windshield glass of Example 1 was obtained.

Preparation of Windshield Glass of Example 2, Comparative Examples 1 and 2

The windshield glasses of Example 2, Comparative Examples 1 and 2 were prepared in the same manner as the windshield glass of Example 1, except that the half-mirror film HM-1 is in place of any one of HM-2 and HM-3 as shown in Table 5, or the half-mirror film was not used.

<Evaluation of Optical Performance of Reflected Image>

An optical evaluation was performed an arrangement shown in Fig. 1. The prepared windshield glass was tilted downward in a manner that the long side of the glass is in the horizontal direction, the short side of the glass is in the vertical direction and the glass side having a thickness of 2 mm is downward so that a screen image was projected on the glass side. The screen image was projected from the glass side having the thickness of 2 mm and the screen image was observed. Regarding the image screen, a liquid crystal panel of 23EA53 VA manufactured by LG Electronics with white brightness of 200 $cdm^{-2}$ and chromaticity of x = 0.32, y = 0.32 was used. A distance between the windshield glass and the liquid crystal panel was 200 mm. The evaluation was performed for the polarization direction of projected light shown in Table 5. The p-polarized light whose electric-vector vibration plane is parallel to and s-polarized light is perpendicular to the page in Fig. 1 in Table 5 is linearly polarized light.

The brightness and the chromaticity were measured using a brightness meter BM-5A manufactured by TOPCON CORPORATION with a white solid image being displayed on the liquid crystal panel 2.

In the evaluation of the double image, white characters on the black background were displayed on the liquid crystal panel, and the visibility of the characters was evaluated with the unaided eyes. The evaluation references were as follows.

A: Characters are readable under an indoor lighting condition and an indoor dark condition.
B: Characters are readable under the indoor lighting condition. Characters are obfuscated under the indoor dark condition. (Non-acceptable level)
C: Characters are obfuscated under both the indoor lighting condition and the indoor dark condition.

In the visibility of screen images in a case of wearing polarized sunglasses, white characters on the black background were displayed on the liquid crystal panel 2, and the visibility of the characters was evaluated in a state of

wearing the polarized sunglasses with the unaided eyes. The evaluation references were as follows.

A: Characters are readable under an indoor lighting condition and an indoor dark condition.
B: Characters are readable under the indoor lighting condition. Characters are obfuscated under the indoor dark condition. (Acceptable level)
C: Characters are obfuscated under both the indoor lighting condition and the indoor dark condition.

<Evaluation of Tint of Exterior View>

The evaluation of the tint in a case where the windshield was seen from the outside was performed by confirming the tint of the glass seen from the outside (position of reference numeral 11) in Fig. 1 in the vertical direction under sunlight during daytime, with the unaided eyes. Furthermore, the chromaticity was measured using the brightness meter.

<Evaluation of External Light in case of wearing Polarized Sunglasses>

The evaluation of visibility in a case of external light being transmitted and a case of wearing polarized sunglasses is performed by observing the reflected sunlight on a water surface outside the glass, in a state of wearing polarized sunglasses at a position within the glass of Fig. 1 (position of reference numeral 3) under sunlight during daytime, with the unaided eyes. The evaluation references were as follows.

A: Reflected light on the water surface is hardly visible.

A': Reflected light on the water surface is slightly visible. There is no glare. (Acceptable level)

B: Reflected light on the water surface is visible. There is glare. (Non-acceptable level)

(Example 3)

Using the windshield glass of Example 2, an evaluation which is the same as above was performed with the distance of 1500 mm between the windshield glass and the liquid crystal panel. Since the distance between the windshield glass and the liquid crystal panel is increased as compared with the distance in Example 2, the virtual image forming position is farther from the driver (reference numeral 3 in FIG. 1).
The results are shown in Table 5.

[Table 5]

Table 5: Result of evaluation

| | Optical functional layer | Polarized state of screen image | Brightness /$cdm^{-2}$ | Chromaticity of reflection | | Chromaticity of exterior view | | Tint evaluation of exterior view | Double image | Visibility of polarized sunglasses | |
|---|---|---|---|---|---|---|---|---|---|---|---|
| | | | | x | y | x | y | | | Image reflection | External light transmittance |
| Example 1 | HM-1 | p | 133 | 0.31 | 0.33 | 0.3 | 0.31 | Colorless | A | A | A' |
| Example 2 | HM-2 | p | 155 | 0.32 | 0.34 | 0.3 | 0.32 | Colorless | A | A | A' |
| Comparative Example 1 | HM-3 | p | 133 | 0.31 | 0.33 | 0.36 | 0.43 | Yellow | A | A | B |
| Comparative Example 2 | None | s | 33 | 0.32 | 0.32 | 0.32 | 0.32 | Colorless | C | C | A |
| Example 3 | HM-2 | p | 150 | 0.32 | 0.34 | 0.3 | 0.32 | Colorless | A | A | A' |

Explanation of References

1: windshield glass

2: liquid crystal panel

3: brightness meter

11: observation position

## Claims

1. A windshield glass comprising:
a projection image display portion, wherein

the projection image display portion includes a circularly polarized light reflection layer and a λ/2 retardation layer,
the circularly polarized light reflection layer includes four or more cholesteric liquid crystal layers,
one layer of the four or more cholesteric liquid crystal layers is a cholesteric liquid crystal layer having a center wavelength of selective reflection at 350 nm or more and less than 490 nm, and
the four or more cholesteric liquid crystal layers have center wavelengths of selective reflection different from each other.

2. The windshield glass according to claim 1,
wherein the cholesteric liquid crystal layer nearest to the λ/2 retardation layer among the four or more cholesteric liquid crystal layers is the cholesteric liquid crystal layer having a center wavelength of selective reflection at 350 nm or more and less than 490 nm.

3. The windshield glass according to claim 1 or 2,
wherein the circularly polarized light reflection layer includes

a cholesteric liquid crystal layer having a center wavelength of selective reflection at 490 nm or more and less than 600 nm,
a cholesteric liquid crystal layer having a center wavelength of selective reflection at 600 nm or more and less than 680 nm, and
a cholesteric liquid crystal layer having a center wavelength of selective reflection at 680 nm or more and less than 850 nm.

4. The windshield glass according to claim 3,
wherein the λ/2 retardation layer, the cholesteric liquid crystal layer having a center wavelength of selective reflection at 350nm or more and less than 490nm, the cholesteric liquid crystal layer having a center wavelength of selective reflection at 490nm or more and less than 600nm, the cholesteric liquid crystal layer having a center wavelength of selective reflection at 600nm or more and less than 680nm, and the cholesteric liquid crystal layer having a center wavelength of selective reflection at 680nm or more and less than 850nm are arranged in this order.

5. The windshield glass according to any one of claims 1 to 4, wherein a front phase difference of the λ/2 retardation layer is in a range of 190 nm to 390 nm.

6. The windshield glass according to any one of claims 1 to 5, wherein all of senses of helixes of the cholesteric liquid crystal layers included in the circularly polarized light reflection layer are the same as each other.

7. The windshield glass according to any one of claims 1 to 6, wherein a total thickness of layers on the λ/2 retardation layer side with respect to the circularly polarized light reflection layer is 0.5 mm or more.

8. The windshield glass according to any one of claims 1 to 7, further comprising:

a first glass plate;
a second glass plate; and
an interlayer between the first glass plate and the second glass plate, wherein

at least a part of the interlayer includes the circularly polarized light reflection layer and the λ/2 retardation layer, and
the first glass plate, the circularly polarized light reflection layer, the λ/2 retardation layer, and the second glass plate are laminated in this order.

**9.** The windshield glass according to claim 8, wherein the interlayer is a resin film.

**10.** The windshield glass according to claim 9, wherein the resin film includes polyvinylbutyral.

**11.** The windshield glass according to any one of claims 1 to 10, wherein a slow axis of the λ/2 retardation layer is in a range of +40° to +65° or in a range of -40° to -65° with respect to an upper vertical direction of the projection image display portion.

**12.** The windshield glass according to any one of claims 1 to 10, wherein

all of senses of helixes of the cholesteric liquid crystal layers included in the circularly polarized light reflection layer are right, and
the slow axis of the λ/2 retardation layer is in a range of 40° to 65° clockwise with respect to an upper vertical direction of the projection image display portion in a case where the slow axis is seen from the λ/2 retardation layer side with respect to the circularly polarized light reflection layer.

**13.** The windshield glass according to any one of claims 1 to 10, wherein

all of senses of helixes of the cholesteric liquid crystal layers included in the circularly polarized light reflection layer are left, and
the slow axis of the λ/2 retardation layer is in a range of 40° to 65° anticlockwise with respect to an upper vertical direction of the projection image display portion in a case where the slow axis is seen from the λ/2 retardation layer side with respect to the circularly polarized light reflection layer.

**14.** The windshield glass according to any one of claims 1 to 13, wherein a half-width Δλ of the selective reflection in at least one or more of the cholesteric liquid crystal layers is 50 nm or less.

**15.** A head-up display system comprising:

the windshield glass according to any one of claims 1 to 14; and
a projector, wherein

the λ/2 retardation layer is disposed closer to the projector than the circularly polarized light reflection layer, and
an incidence ray from the projector is incident at an angle of 45° to 70° with respect to a normal line of the projection image display portion.

**16.** The head-up display system according to claim 15, wherein the incidence ray is p-polarized light which vibrates in a direction parallel to a plane of incidence.

**17.** The head-up display system according to claim 15 or 16, wherein the incidence ray is incident from a bottom of the projection image display portion.

**18.** A half-mirror film comprising:

a circularly polarized light reflection layer; and
a λ/2 retardation layer,
wherein the circularly polarized light reflection layer includes

a cholesteric liquid crystal layer having a center wavelength of selective reflection at 350 nm or more and less than 490 nm,
a cholesteric liquid crystal layer having a center wavelength of selective reflection at 490 nm or more and less than 600 nm,
a cholesteric liquid crystal layer having a center wavelength of selective reflection at 600 nm or more and less than 680 nm, and
a cholesteric liquid crystal layer having a center wavelength of selective reflection at 680 nm or more and less than 850 nm, in this order from the λ/2 retardation layer.

FIG. 1

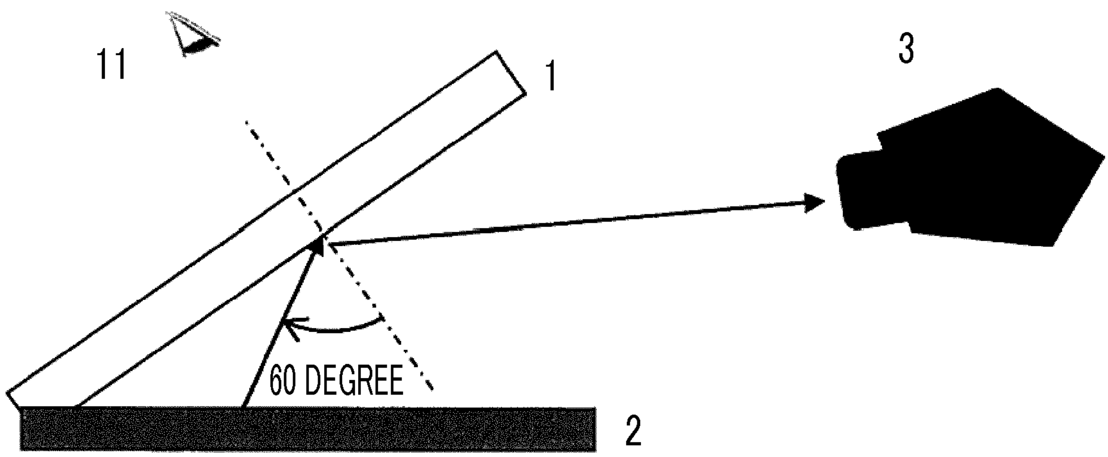

## INTERNATIONAL SEARCH REPORT

International application No.
PCT/JP2017/038852

A. CLASSIFICATION OF SUBJECT MATTER
Int.Cl. G02B5/30(2006.01)i, B32B17/10(2006.01)i, B60J1/02(2006.01)i, B60K35/00(2006.01)i, C03C17/34(2006.01)i, C03C27/12(2006.01)i, G02B27/01(2006.01)i, G02F1/13363(2006.01)i

According to International Patent Classification (IPC) or to both national classification and IPC

B. FIELDS SEARCHED

Minimum documentation searched (classification system followed by classification symbols)
Int.Cl. G02B5/30, G02B27/01, B60K35/00, B60J1/02, G02B5/08, C03C17/34, C03C27/12, B32B17/10, G02F1/13-1/13363

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2016-153281 A (FUJIFILM CORPORATION) 25 August 2016, paragraphs [0001], [0002], [0009], [0019]-[0045], [0062]-[0100], table 1, fig. 1 & WO 2016/133187 A1 & CN 107209389 A | 1-18 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 January 2018 | 30 January 2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2017/038852

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2016/056617 A1 (NIPPON KAYAKU KK) 14 April 2016, paragraphs [0001]-[0003], [0009]-[0012], [0014], [0015], [0017]-[0020], [0029]-[0052], [0058]-[0070], [0084], table 3, fig. 1-10 & US 2017/0235030 A1, paragraphs [0001]-[0003], [0013], [0014], [0040], [0057], [0058], [0061]-[0064], [0073]-[0099], [0105]-[0124], [0136], table 3, fig. 1-10 & EP 3206058 A1 & CN 106415335 A & KR 10-2017-0018095 A & TW 201621399 A | 1-18 |
| A | WO 2015/141759 A1 (FUJIFILM CORPORATION) 24 September 2015, paragraphs [0001], [0002], [0022]-[0035], [0060]-[0075], [0078]-[0081], [0099]-[0112], tables 2, 3 & US 2016/0377776 A1, paragraphs [0002]-[0005], [0052]-[0073], [0130]-[0173], [0178]-[0185], [0213]-[0261], tables 2, 3 | 1-18 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011505330 A
- JP 2006512622 A
- WO 2016052367 A
- US 4683327 A
- US 5622648 A
- US 5770107 A
- WO 95022586 A
- WO 95024455 A
- WO 97000600 A
- WO 98023580 A
- WO 98052905 A
- JP 1272551 A
- JP H01272551 A
- JP 6016616 A
- JP H06016616 A
- JP 7110469 A
- JP H07110469 A
- JP 11080081 A
- JP H11080081 A
- JP 2001328973 A
- WO 2015115390 A
- WO 2015147243 A
- WO 2016035873 A
- JP 2015163596 A
- JP 2016053149 A
- WO 2016047648 A
- JP 2013112631 A
- JP 2010070543 A
- JP 4725516 B
- JP 2003287623 A
- JP 2002302487 A
- JP 2002080478 A
- JP 2002080851 A
- JP 2010181852 A
- JP 2014034581 A
- US 2367661 B
- US 2367670 A
- US 2448828 A
- US 2722512 A
- US 3046127 A
- US 2951758 A
- US 3549367 A
- JP 60105667 A
- JP S60105667 A
- US 4239850 A
- JP 63040799 B
- JP S63040799 B
- JP 5029234 B
- JP H5029234 B
- JP 10095788 A
- JP H10095788 A
- JP 10029997 A
- JP H10029997 A
- JP 2001233842 A
- JP 2000080068 A
- JP 2006342166 A
- JP 2013114249 A
- JP 2014137466 A
- JP 4223071 B
- JP 2010262028 A
- JP 2014500852 A
- JP 2000066385 A
- JP 4454067 B
- US 4212970 A
- JP 2012208494 A
- JP 2007272185 A
- JP 2012203237 A
- JP 7270711 A
- JP H7270711 A
- JP 2013228674 A
- JP 2000221449 A
- JP 2012226303 A
- JP 2010145745 A
- JP 2007523369 A
- JP 2141720 A
- JP H02141720 A
- JP 10096874 A
- JP H10096874 A
- JP 2003098470 A
- US 5013134 A
- JP 2009150947 A
- JP 2017015902 A


### Non-patent literature cited in the description


- Liquid Crystal Chemistry Experiment Introduction. Sigma Publication, 2007, 46
- Handbook of liquid crystals Editorial Committee of Handbook of liquid crystals. Maruzen, 196
- *Makromol. Chem.,* 1989, vol. 190, 2255
- *Advanced Material,* 1993, vol. 5, 107
- Chiral Agents for TN and STN. Liquid Crystal Device Handbooks. 1989, 199